# EUROPEAN PATENT APPLICATION

(11) **EP 4 715 948 A1**
(43) Date of publication of application: **25.03.2026**
(21) Application number: 25739145.8
(22) Date of filing: 10.01.2025
(51) Int. Cl.: H01M 10/0587, H01M 10/04, H01M 10/42, G05B 19/418, H01M 10/052

(54) **SECONDARY BATTERY MANUFACTURING SYSTEM**

(30) Priority: 12.01.2024 KR 20240005395; 24.12.2024 KR 20240195585
(71) Applicant: LG Energy Solution, Ltd., Seoul 07335 (KR)
(72) Inventor: LEE, Hee Won, Daejeon 34122 (KR); PARK, Kyoung Chan, Daejeon 34122 (KR); PARK, Yeong Heon, Daejeon 34122 (KR); KIM, Jeong Jin, Daejeon 34122 (KR); HAN, Hyung Wook, Daejeon 34122 (KR); LEE, Seok Hun, Daejeon 34122 (KR); JANG, Seong Won, Daejeon 34122 (KR); KIM, Min Su, Daejeon 34122 (KR); JUNG, Tae Kwang, Daejeon 34122 (KR)
(74) Representative: BCKIP Part mbB
(86) International application number: PCT/KR2025/000646
(87) International publication number: WO 2025/150985

(57) **Abstract**

According to exemplary embodiments, a method for managing cell tracking data is provided. The method comprises the steps of: loading cell tracking data including an unrecognized jelly roll ID and a jelly roll ID adjacent to the unrecognized jelly roll ID, wherein the jelly roll ID is used to distinguish jelly rolls which are wound structures of a positive electrode, a negative electrode, and a separator, and restoring the unrecognized jelly roll ID on the basis of the jelly roll ID.

## Description

### Technical Field

This application claims the benefit of Korean Patent Application No. 10-2024-0005395, filed on January 12, 2024, and Korean Patent Application No. 10-2024-0195585, filed on December 24, 2024, in the Korean Intellectual Property Office, the disclosure of which is incorporated herein by reference in its entirety.

Example embodiments of the present disclosure relate to a secondary battery manufacturing system.

### Background Art

A secondary battery, unlike a primary battery, may be charged and discharged multiple times. The secondary battery is widely used as an energy source for various wireless devices such as a handset, a notebook computer, and a wireless vacuum cleaner. Recently, as the manufacturing cost per unit capacity of the secondary battery decreases dramatically due to improvements in energy density and economies of scale and the driving range of a battery electric vehicle (BEV) increases to the same level as that of a fuel vehicle, the primary use for the secondary battery is shifting from mobile devices to mobility.

The secondary battery is manufactured through an electrode process, an assembly process, and an activation process. In order to enhance the yield and reliability of a secondary battery manufacturing process, securing traceability of the manufacturing process is needed. Accordingly, various studies are being conducted to secure the traceability of the secondary battery manufacturing process.

### Detailed Description of the Invention

### Technical Goals

A goal of the present disclosure is to provide a secondary battery manufacturing system with traceability enhanced.

### Technical solutions

According to example embodiments of the present disclosure, provided is a method of managing cell tracking data. The method includes loading cell tracking data including an unrecognized jelly roll identification (ID) and a jelly roll ID adjacent to the unrecognized jelly roll ID, where the jelly roll ID is used to distinguish a jelly roll, which is a winding structure of a positive electrode, a negative electrode, and a separator, and restoring the unrecognized jelly roll ID based on the jelly roll ID.

The jelly roll ID may precede the unrecognized jelly roll ID.

The jelly roll ID may follow the unrecognized jelly roll ID.

The jelly roll may be input into an assembly process of a secondary battery, and the jelly roll ID may include a symbol representing an input order of the jelly roll, and the unrecognized jelly roll ID may be restored as a value in which the symbol representing the input order of the jelly roll ID is changed.

The symbol may be changed to indicate a preceding order.

The symbol may be changed to indicate a following order.

According to example embodiments, provided is a method of managing cell tracking data. The method includes loading cell tracking data including an unrecognized can ID and a can ID adjacent to the unrecognized can ID, where the can ID is used to distinguish a cell case into which a jelly roll, which is a winding structure of a positive electrode, a negative electrode, and a separator, is inserted, and restoring the unrecognized can ID based on the can ID, and the can ID is determined by reading of a data matrix of the cell case, and the unrecognized can ID is determined by failure of the reading of the data matrix.

The can ID may precede the unrecognized can ID.

The can ID may follow the unrecognized can ID.

The can may be input into an assembly process of a secondary battery, and the can ID may include a symbol representing an input order of the cell case, and the unrecognized can ID may be restored as a value in which the symbol representing the input order of the can ID is changed.

The symbol may be changed to indicate a preceding order.

The symbol may be changed to indicate a following order.

According to example embodiments, provided is a method of managing cell tracking data. The method includes loading a data set for restoration including first cell tracking data and second cell tracking data and restoring an unrecognized can ID of the first cell tracking data based on the data set for restoration, and the first cell tracking data is collected from a first sub-equipment configured to perform a first sub-process of an assembly process of a battery cell, and the second cell tracking data is collected from a second sub-equipment configured to perform a second sub-process of the assembly process of the battery cell, and the first cell tracking data and the second cell tracking data include a plurality of can IDs, and the can ID is used to distinguish a cell case into which a jelly roll, which is a winding structure of a positive electrode, a negative electrode, and a separator, is inserted, and the can ID is determined by reading of a data matrix of the cell case, and the unrecognized can ID is determined by failure of the reading of the data matrix.

The second sub-process may be performed after the first sub-process is performed.

The second sub-process may be performed before the first sub-process is performed.

The plurality of can IDs may include a first can ID preceding the unrecognized can ID and a second can ID following the unrecognized can ID, and the unrecognized can ID may be restored based on a portion of the second cell tracking data between the first can ID and the second can ID.

The unrecognized can ID may be restored as one of can IDs present between the first can ID and the second can ID among the plurality of can IDs of the second cell tracking data.

The unrecognized can ID may be restored based on one of the first can ID and the second can ID.

According to example embodiments, provided is a method of managing cell tracking data. The method includes loading a data set for restoration including first cell tracking data and second cell tracking data and restoring an unrecognized can ID of the first cell tracking data, and the first cell tracking data is collected from a first sub-equipment configured to perform a first sub-process of an assembly process of a battery cell, and the second cell tracking data is collected from a second sub-equipment configured to perform a second sub-process of the assembly process of the battery cell, and the first cell tracking data and the second cell tracking data include a plurality of can IDs, and the can ID is used to distinguish a battery cell including a jelly roll, which is a winding structure of a positive electrode, a negative electrode, and a separator, and a cell case into which the jelly roll is inserted, and the can ID is determined by reading of a data matrix of the cell case, and the unrecognized can ID is determined by failure of the reading of the data matrix.

The second sub-process may be performed after the first sub-process is performed.

The second sub-process may be performed before the first sub-process is performed.

According to example embodiments, provided is a method of managing cell tracking data. The plurality of can IDs may include a first can ID preceding the unrecognized can ID and a second can ID following the unrecognized can ID, and the unrecognized can ID may be restored based on a portion of the second cell tracking data between the first can ID and the second can ID.

The unrecognized can ID may be restored as a lot ID present between the first can ID and the second can ID among the plurality of lot IDs of the second cell tracking data.

According to example embodiments, provided is a method of managing cell tracking data. The method includes configuring a first data window for restoration based on first cell tracking data and configuring a second data window for restoration based on second cell tracking data and restoring an unrecognized can ID of the first cell tracking data based on the second data window for restoration, and the first cell tracking data is collected from a first sub-equipment configured to perform a first sub-process of an assembly process of a battery cell, and the second cell tracking data is collected from a second sub-equipment configured to perform a second sub-process of the assembly process of the battery cell, and the first cell tracking data and the second cell tracking data include a plurality of can IDs, and the can ID is used to distinguish a battery cell including a jelly roll, which is a winding structure of a positive electrode, a negative electrode, and a separator, and a cell case into which the jelly roll is inserted, and the unrecognized can ID is generated when determining of the plurality of can IDs fails.

The second sub-process may be performed after the first sub-process is performed.

The second sub-process may be performed before the first sub-process is performed.

The first data window for restoration may include a first can ID, which is a first of can IDs included in the first data window for restoration among the plurality of can IDs, and a second can ID, which is a last of the can IDs included in the first data window for restoration among the plurality of can IDs, and the second data window for restoration may include can IDs between the first can ID and the second can ID among the plurality of can IDs.

The unrecognized can ID of the first cell tracking data may be restored based on matching the first cell tracking data with the can IDs included in the second data window for restoration among the plurality of can IDs.

The unrecognized can ID of the first cell tracking data may be restored based on a can ID that is not present in the first cell tracking data among the can IDs included in the second data window for restoration among the plurality of can IDs.

### Effects of the Invention

A method of managing cell tracking data according to example embodiments of the present disclosure may restore omitted cell tracking data. Accordingly, the manufacturing traceability of a secondary battery may be enhanced.

The effects that may be obtained from the example embodiments of the present disclosure are not limited to the effects mentioned above, and other unstated effects may be clearly inferred and understood by those skilled in the art to which the example embodiments of the present disclosure pertain from the following description. In other words, unintended effects according to the implementation of the example embodiments of the present disclosure may also be inferred by those skilled in the art from the example embodiments of the present disclosure.

### Brief Description of Drawings

FIG. 1 is a flowchart showing a method of manufacturing a secondary battery according to example embodiments.
FIG. 2 is a block diagram showing a secondary battery manufacturing system according to example embodiments.
FIGS. 3 to 12 are diagrams for illustrating a method of manufacturing a secondary battery according to example embodiments.
FIG. 13 is a diagram for illustrating a method of managing data by a secondary battery manufacturing system according to example embodiments.
FIG. 14 is a diagram showing roll map data illustrated in FIG. 13.
FIG. 15 is a flowchart for illustrating a method of managing cell tracking data according to example embodiments.
FIG. 16 is a diagram for illustrating a method of managing cell tracking data according to example embodiments.
FIG. 17 is a diagram for illustrating a method of managing cell tracking data according to example embodiments.
FIG. 18 is a flowchart for illustrating a method of managing cell tracking data according to example embodiments.
FIG. 19 is a diagram for illustrating a method of managing cell tracking data according to example embodiments.
FIG. 20 is a diagram for illustrating a method of managing cell tracking data according to example embodiments.
FIG. 21 is a flowchart for illustrating a method of managing cell tracking data according to example embodiments.
FIG. 22 is a diagram for illustrating a method of managing cell tracking data according to example embodiments.
FIG. 23 is a flowchart for illustrating a method of managing cell tracking data according to example embodiments.
FIG. 24 is a flowchart for illustrating a method of managing cell tracking data according to example embodiments.
FIG. 25 is a flowchart for illustrating a method of managing cell tracking data according to example embodiments.
FIG. 26 is a flowchart for illustrating a method of managing cell tracking data according to example embodiments.
FIG. 27 is a flowchart for illustrating a method of managing cell tracking data according to example embodiments.
FIG. 28 is a flowchart for illustrating a method of managing cell tracking data according to example embodiments.

### Mode for Carrying Out the Invention

Hereinafter, example embodiments of the present disclosure are described in detail with reference to the accompanying drawings. Prior to this description, the words and terms used in the present disclosure are not to be construed as limited to common or dictionary meanings but construed as meanings and concepts coinciding with the technical idea of the present disclosure based on the principle that the inventor may appropriately define the concept of the term to explain his or her own disclosure in the best way.

Therefore, the example embodiments described in the present disclosure and the configurations illustrated in the drawings are only the most exemplary embodiment of the present disclosure and do not fully cover the technical idea of the present disclosure, and thus, it should be understood that various equivalents and modification examples may be present as alternatives thereto when this application is filed.

In addition, in describing the present disclosure, when it is determined that a specific description of a related known configuration or function may obscure the gist of the present disclosure, the detailed description thereof will be omitted.

Since example embodiments of the present disclosure are provided to more fully describe the present disclosure to those skilled in the art, shapes and sizes of elements in the drawings may be exaggerated, omitted, or schematically illustrated for clearer description. Therefore, the size or ratio of each element does not entirely reflect the actual size or ratio.

### (First and Second Examples)

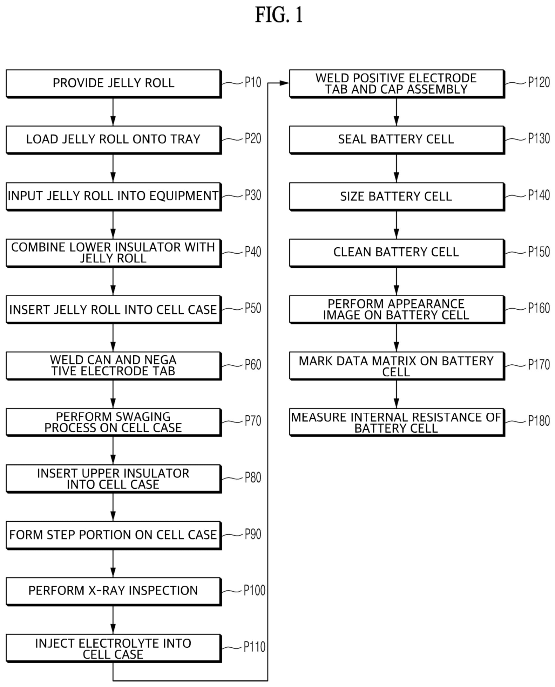

FIG. 1 is a flowchart showing a method of manufacturing a secondary battery according to example embodiments.

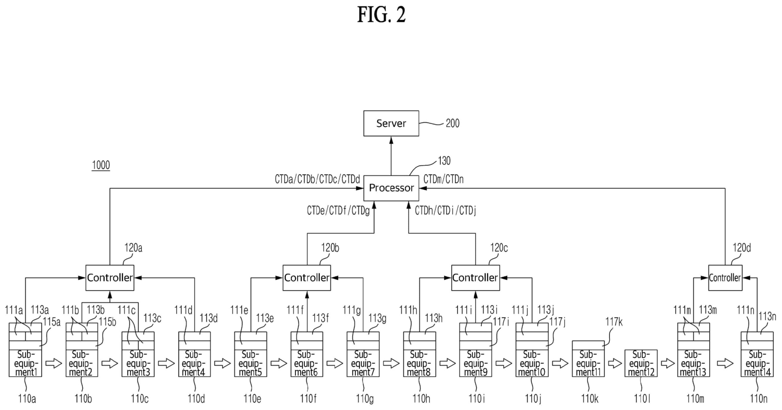

FIG. 2 is a block diagram showing a secondary battery manufacturing system 1000 according to example embodiments.

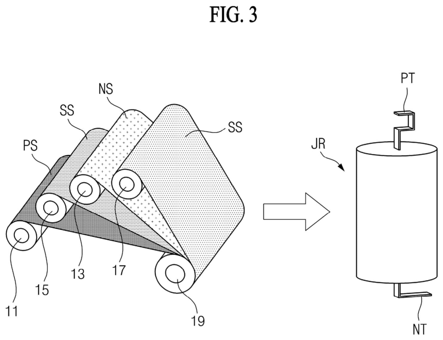

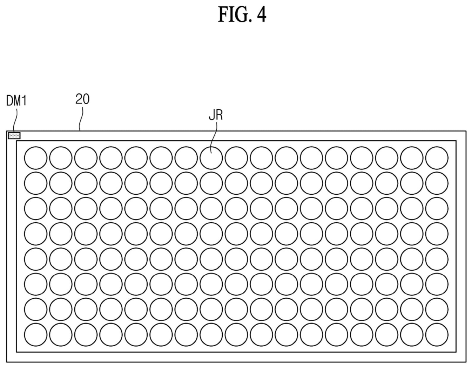

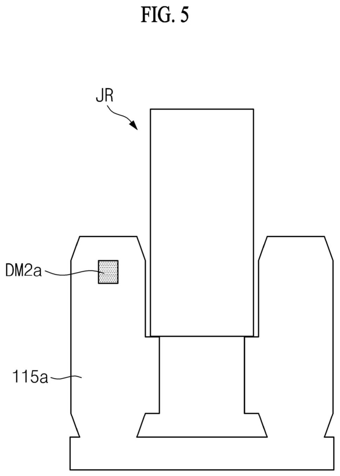

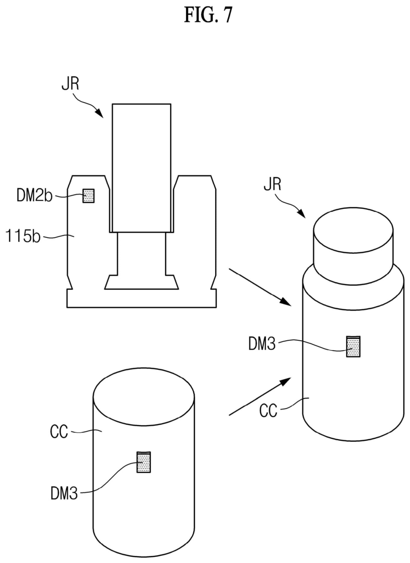

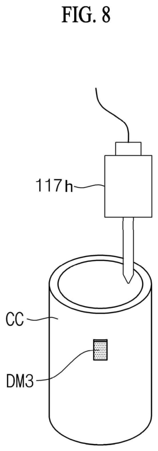

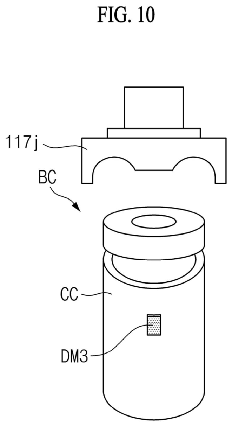

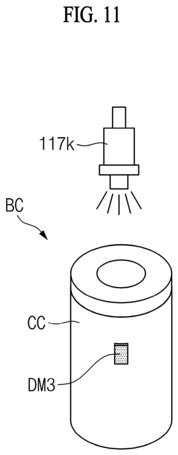

FIGS. 3 to 12 are diagrams for illustrating a method of manufacturing a secondary battery according to example embodiments.

Referring to FIGS. 1 and 2, the secondary battery manufacturing system 1000 may be configured to perform a secondary battery manufacturing process. Here, the secondary battery manufacturing process may include an electrode manufacturing process, an assembly process, and an activation process of a secondary battery. According to an example embodiment, the secondary battery manufacturing system 1000 may be configured to perform the assembly process of the secondary battery. For example, the secondary battery manufacturing system 1000 may be configured to perform the assembly process of a can-type battery (for example, a prismatic battery or a cylindrical battery) or a pouch-type battery. The secondary battery manufacturing system 1000 may include a plurality of pieces of sub-equipment 110a, 110b, 110c, 110d, 110e, 110f, 110g, 110h, 110i, 110j, 110k, 1101, 110m, and 110n, controllers 120a, 120b, 120c, and 120d, a processor 130, and a server 200. The number of the plurality of pieces of sub-equipment 110a, 110b, 110c, 110d, 110e, 110f, 110g, 110h, 110i, 110j, 110k, 1101, 110m, and 110n and the number of the controllers 120a, 120b, 120c, and 120d illustrated in FIG. 2 are for illustrative purposes, and the present disclosure is not limited thereto.

The secondary battery manufacturing process may include a plurality of sub-processes, and each of the plurality of pieces of sub-equipment 110a, 110b, 110c, 110d, 110e, 110f, 110g, 110h, 110i, 110j, 110k, 1101, 110m, and 110n may be configured to perform one of the sub-processes (or, one or more of the sub-processes).

The controllers 120a, 120b, 120c, and 120d may be configured to process cell tracking data obtained from the plurality of pieces of sub-equipment 110a, 110b, 110c, 110d, 110e, 110f, 110g, 110h, 110i, 110j, 110k, 1101, 110m, and 110n. More specifically, the controller 120a may be configured to process cell tracking data CTDa, CTDb, CTDc, and CTDd obtained from controllers 113a, 113b, 113c, and 113d respectively included in the pieces of sub-equipment 110a, 110b, 110c, and 110d, and the controller 120b may be configured to process cell tracking data CTDe, CTDf, and CTDg obtained from controllers 113e, 113f, and 113g respectively included in the pieces of sub-equipment 110e, 110f, and 110g, and the controller 120c may be configured to process cell tracking data CTDh, CTDi, and CTDj obtained from controllers 113h, 113i, and 113j respectively included in the pieces of sub-equipment 110h, 110i, and 110j, and the controller 120d may be configured to process cell tracking data CTDm and CTDn obtained from controllers 113m and 113n respectively included in the pieces of sub-equipment 110m and 110n.

The number of the controllers 120a, 120b, 120c, and 120d and allocation of the controllers 120a, 120b, 120c, and 120d to the plurality of pieces of sub-equipment 110a, 110b, 110c, 110d, 110e, 110f, 110g, 110h, 110i, 110j, 110k, 1101, 110m, and 110n illustrated in FIG. 2 are for illustrative purposes, and the present disclosure is not limited thereto. For example, the secondary battery manufacturing system 1000 may include a single controller that processes cell tracking data obtained from the plurality of pieces of sub-equipment 110a, 110b, 110c, 110d, 110e, 110f, 110g, 110h, 110i, 110j, 110k, 1101, 110m, and 110n. In this case, the single controller may be configured to independently process cell tracking data obtained from each of the plurality of pieces of sub-equipment 110a, 110b, 110c, 110d, 110e, 110f, 110g, 110h, 110i, 110j, 110k, 1101, 110m, and 110n.

The controller (at least one of 120a, 120b, 120c, and 120d) may be configured to obtain a cell identification (ID) corresponding to a semi-finished cell based on the cell tracking data CTDa, CTDb, CTDc, CTDd, CTDe, CTDf, CTDg, CTDh, CTDi, CTDj, CTDm, and CTDn obtained from the plurality of pieces of sub-equipment 110a, 110b, 110c, 110d, 110e, 110f, 110g, 110h, 110i, 110j, 110k, 110l, 110m, and 110n. According to an example embodiment, the cell ID may be a virtual ID generated using data related to the semi-finished cell. For example, the controller (at least one of 120a, 120b, 120c, and 120d) may generate a virtual ID (for example, a jelly roll ID) of a semi-finished cell based on at least one of a tray ID, tray coordinates, an electrode lot ID, and an electrode count of a tray onto which the semi-finished cell (for example, a jelly roll) is loaded. According to an example embodiment, the cell ID may be a representative ID for tracking a semi-finished cell in at least one sub-process prior to a sub-process of obtaining a holder ID to be described below. For example, when a carrier ID corresponding to a holder ID is obtained based on process P40 of FIG. 1, a cell ID may be a jelly roll ID generated based on process P30 of FIG. 1. As another example, when a can ID corresponding to a holder ID is obtained based on process P50 of FIG. 1, a cell ID may be the jelly roll ID generated based on process P30 of FIG. 1 or the carrier ID obtained based on process P40 of FIG. 1.

Here, the semi-finished cell may include various types of semi-finished cells manufactured during the manufacturing process performed on the secondary battery manufacturing system 1000. For example, in the case of a can-type battery manufacturing process, the semi-finished cell may be configured as a jelly roll, which is a winding structure of a positive electrode, a negative electrode, and a separator interposed therebetween, or a can-type battery cell in which a jelly roll is inserted into a cell case. As another example, in the case of a pouch-type battery manufacturing process, the semi-finished cell may be configured as a unit cell composed of at least one electrode of a polarity (for example, a positive electrode and/or a negative electrode) and a separator, a stacked electrode assembly formed by stacking a plurality of unit cells, a foldable electrode assembly formed by folding a plurality of unit cells, or a pouch-type battery cell in which an electrode assembly is inserted into a pouch. In this case, the unit cell may be configured as a mono cell in which a positive electrode and a negative electrode are respectively positioned on two outermost sides, a bi-cell in which electrodes of the same polarity are positioned on two outermost sides, or a half cell in which a positive electrode or a negative electrode is positioned between separators of the outermost sides.

The controller (at least one of 120a, 120b, 120c, and 120d) may be configured to obtain a holder ID corresponding to a holder, in which the semi-finished cell is placed, based on the cell tracking data CTDa, CTDb, CTDc, CTDd, CTDe, CTDf, CTDg, CTDh, CTDi, CTDj, CTDm, and CTDn obtained from the plurality of pieces of sub-equipment 110a, 110b, 110c, 110d, 110e, 110f, 110g, 110h, 110i, 110j, 110k, 1101, 110m, and 110n.

Here, the holder may include various types of holders in which a semi-finished cell is placed during the manufacturing process performed on the secondary battery manufacturing system 1000. For example, in the case of a can-type battery manufacturing process, the holder may be configured as a carrier 115a or 115b on which a jelly roll is placed or a cell case into which a jelly roll is inserted. The carrier 115a or 115b may be a configuration used to hold a jelly roll in particular sub-processes P30, P40, and P50 targeting the jelly roll. The cell case may be a configuration of a cylindrical battery cell and may be a configuration into which the jelly roll is inserted in the particular sub-process P50. As another example, in the case of a pouch-type battery manufacturing process, the holder may be configured as a magazine in which unit cells are stacked or a pouch into which unit cells are inserted. The magazine may be a configuration that stacks and holds a plurality of unit cells to be stacked or folded before a stacking process or folding process for forming an electrode assembly by stacking or folding the plurality of unit cells, after a notching process for forming an electrode tab on an electrode sheet of a unit cell and a lamination process for bonding the unit cell to a separator, during the assembly process of the pouch-type battery. The pouch may be a configuration of the pouch-type battery cell and may be a configuration into which a stack cell or a folding cell is inserted in a packaging process.

The controller (at least one of 120a, 120b, 120c, and 120d) may obtain a cell ID and/or a holder ID by using various data included in the cell tracking data CTDa, CTDb, CTDc, CTDd, CTDe, CTDf, CTDg, CTDh, CTDi, CTDj, CTDm, and CTDn.

According to an example embodiment, the cell tracking data CTDa, CTDb, CTDc, CTDd, CTDe, CTDf, CTDg, CTDh, CTDi, CTDj, CTDm, and CTDn may include data for obtaining the cell ID and/or the holder ID. The cell tracking data CTDa, CTDb, CTDc, CTDd, CTDe, CTDf, CTDg, CTDh, CTDi, CTDj, CTDm, and CTDn may include identification data identified by detecting a code object related to the semi-finished cell and/or the holder. For example, the identification data may include at least one of a tray ID identified through a code object on a tray on which a jelly roll is placed, a carrier ID identified through a code object on a carrier onto which a jelly roll is loaded, and a can ID identified through a code object on a cell case into which a jelly roll is inserted. Here, the code object may be a code image including information about an ID of a target detected and identified by a code reader (for example, a matrix reader 111a, 111b, 111c, 111d, 111e, 111f, 111g, 111h, 111i, 111j, 111m, or 111n) and may be implemented as at least one of a data matrix, a QR code, and a barcode. Hereinafter, the present disclosure will be described with a focus on an example embodiment in which the data matrix is used as the code object. However, this is for illustrative purposes and the present disclosure is not limited thereto. In addition, the identification data may further include an electrode lot ID and an electrode count loaded by the plurality of pieces of sub-equipment 110a, 110b, 110c, 110d, 110e, 110f, 110g, 110h, 110i, 110j, 110k, 110l, 110m, and 110n with identification of an ID as a trigger.

According to an example embodiment, the cell tracking data CTDa, CTDb, CTDc, CTDd, CTDe, CTDf, CTDg, CTDh, CTDi, CTDj, CTDm, and CTDn may include time data regarding the time at which the identification data is identified. This time data may be used for matching between a plurality of IDs.

The controller (at least one of 120a, 120b, 120c, and 120d) may be configured to match the obtained cell ID and holder ID.

According to an example embodiment, the controller (at least one of 120a, 120b, 120c, and 120d) may be configured to match a jelly roll ID corresponding to a jelly roll and a carrier ID corresponding to a carrier on which the jelly roll is placed during the secondary battery manufacturing process. For example, the controller (at least one of 120a, 120b, 120c, and 120d) may be configured to match a jelly roll ID and a carrier ID based on the cell tracking data CTDa obtained from the sub-equipment 110a that performs a sub-process of loading a jelly roll placed on a tray onto the carrier 115a. Here, the cell tracking data CTDa may include time data regarding time at which the jelly roll ID is generated and time at which the carrier ID is identified. The controller (at least one of 120a, 120b, 120c, and 120d) may be configured to match the jelly roll ID and the carrier ID based on a time interval between the time at which the jelly roll ID is generated and the time at which the carrier ID is identified.

According to an example embodiment, the controller (at least one of 120a, 120b, 120c, and 120d) may be configured to match a plurality of carrier IDs that respectively correspond to a plurality of carriers onto which the same jelly roll is loaded with each other during the secondary battery manufacturing process. For example, the controller (at least one of 120a, 120b, 120c, and 120d) may be configured to match a first carrier ID corresponding to the carrier 115a and a second carrier ID corresponding to the carrier 115b with each other based on the cell tracking data CTDb obtained from the sub-equipment 110b that performs a sub-process of unloading the jelly roll loaded onto the carrier 115a, loading the jelly roll onto the carrier 115b, and coupling the jelly roll loaded onto the carrier 115b to a lower insulator. Here, the cell tracking data CTDb may include time data regarding a first time at which the first carrier ID is identified and a second time at which the second carrier ID is identified by the sub-equipment 110b. The controller (at least one of 120a, 120b, 120c, and 120d) may be configured to match the first carrier ID and the second carrier ID based on a time interval between the first time and the second time. A buffer of the controller (at least one of 120a, 120b, 120c, and 120d) may store matching between the jelly roll ID based on the cell tracking data CTDa and the carrier ID corresponding to the carrier 115a. The controller (at least one of 120a, 120b, 120c, and 120d) may be configured to match a jelly roll ID with a carrier ID corresponding to the carrier 115b based on the matching stored in the buffer and the matching between the first carrier ID and the second carrier ID based on the cell tracking data CTDb.

The controller (at least one of 120a, 120b, 120c, and 120d) may be configured to obtain a can ID corresponding to a cell case into which a jelly roll is inserted based on the cell tracking data CTDa, CTDb, CTDc, CTDd, CTDe, CTDf, CTDg, CTDh, CTDi, CTDj, CTDm, and CTDn.

According to an example embodiment, the controller (at least one of 120a, 120b, 120c, and 120d) may be configured to match a jelly roll ID corresponding to a jelly roll and a can ID corresponding to a cell case into which the jelly roll is inserted during the secondary battery manufacturing process. For example, the controller (at least one of 120a, 120b, 120c, and 120d) may be configured to match the carrier ID corresponding to the carrier 115b and a can ID based on the cell tracking data CTDc obtained from the sub-equipment 110c that performs a sub-process of inserting the jelly roll loaded onto the carrier 115b into a cell case. Here, the cell tracking data CTDc may include time data regarding a third time at which the carrier ID is identified and a fourth time at which the can ID is identified by the sub-equipment 110c. The controller (at least one of 120a, 120b, 120c, and 120d) may be configured to match the carrier ID and the can ID based on a time interval between the third time and the fourth time. A buffer of the controller (at least one of 120a, 120b, 120c, and 120d) may store matching between the jelly roll ID based on the cell tracking data CTDa and CTDb and the carrier ID corresponding to the carrier 115b. The controller (at least one of 120a, 120b, 120c, and 120d) may be configured to match the jelly roll ID with the can ID based on the matching stored in the buffer and the matching between the carrier ID and the can ID based on the cell tracking data CTDc.

According to an example embodiment, the controller (at least one of 120a, 120b, 120c, and 120d) may be configured to map an ID obtained from each sub-process with process data and/or inspection data obtained from the corresponding sub-process. Here, the process data may include information related to equipment performing the corresponding process (for example, a motor load value and revolutions per minute (RPM)) and time at which the corresponding process is performed. The inspection data may include measurement information obtained by measuring the dimensions of a semi-finished product to be inspected by scanning, an image (for example, X-RAY image and vision image) obtained by capturing the semi-finished product to be inspected, and state information of the semi-finished product inspected based on at least one of the measurement information and the image. Mapping may represent storing data linked to the ID so that the data that serves as a value may be referenced through the ID that serves as a key. In other words, as the ID is mapped with the process data and/or the inspection data, the process data and/or the inspection data may be referenced through the ID.

The manufacturing traceability of the secondary battery may be enhanced by the controller (at least one of 120a, 120b, 120c, and 120d) tracking the cell ID, process data, and inspection data of the semi-finished cell going through each sub-process of the secondary battery manufacturing system 1000 through the above-described operations.

Hereinafter, a can-type battery manufacturing process is taken as an example of the secondary battery manufacturing process by the secondary battery manufacturing system 1000, and a method of matching at least two or more of a jelly roll ID, a carrier ID, a can ID, and a lot ID in a plurality of sub-processes included in the can-type battery manufacturing process and a method of mapping an ID with process data are specifically described. However, this is only an example for convenience of description, and a cell tracking method of the present disclosure is not limited to the can-type battery manufacturing process and may also be applied to a pouch-type battery manufacturing process.

Referring to FIGS. 1 to 3, in process P10, a jelly roll JR may be provided. Providing the jelly roll JR may include winding a positive electrode sheet PS, a negative electrode sheet NS, and separators SP and cutting the positive electrode sheet PS, the negative electrode sheet NS, and the separators SP so that the winding structure is separated. The positive electrode sheet PS may be unwound from a positive electrode roll by an unwinder 11, the negative electrode sheet NS may be unwound from a positive electrode roll by an unwinder 13, and a separator sheet SS may be unwound from separator rolls by unwinders 15 and 17. The positive electrode sheet PS may include a positive electrode current collector and a positive electrode active material. The negative electrode sheet NS may include a negative electrode current collector and a negative electrode active material.

The thickness of the positive electrode current collector may range from about 3 micrometers (*µ*m) to about 500 *µ*m. The positive electrode current collector may not cause a chemical change in the secondary battery to be finally manufactured and may have high conductivity. The positive electrode current collector may include, for example, stainless steel, aluminum, nickel, titanium, calcined carbon, and aluminum. The positive electrode current collector may also include stainless steel surface-treated with carbon, nickel, titanium, or silver. A surface of the positive electrode current collector may include a fine uneven structure to increase the adhesion of the active material. The positive electrode current collector may have a shape such as a film, a sheet, a foil, a net, a porous material, a foam, or a nonwoven fabric.

The positive electrode active material is a material that may cause an electrochemical reaction. The positive electrode active material may be lithium transition metal oxide. The positive electrode active material may include, for example, a layered compound such as lithium cobalt oxide (LiCoO2) and lithium nickel oxide (LiNiO2) substituted with one or more transition metals, lithium manganese oxide substituted with one or more transition metals, lithium nickel-based oxide represented by a chemical formula LiNi1-yMyO2 (here, M is one of Co, Mn, Al, Cu, Fe, Mg, B, Cr, Zn, and Ga, and 0.01≤y≤0.7), lithium nickel cobalt manganese composite oxide represented by Li1+zNibMncCo1-(b+c+d)MdO(2-e)Ae (here, -0.5≤z≤0.5, 0.1≤b≤0.8, 0.1≤c≤0.8, 0≤d≤0.2, 0≤e≤0.2, and b+c+d<1, M is one of Al, Mg, Cr, Ti, Si, and Y, and A is one of F, P, and Cl) such as Li1+zNi1/3Co1/3Mn1/3O2 and Li1+zNi0.4Mn0.4Co0.202, and olivine-based lithium metal phosphate represented by a chemical formula Li1+xM1-yM'yPO4-zXz (here, M is a transition metal, more specifically, one of Fe, Mn, Co, and Ni, M' is one of Al, Mg, and Ti, X is one of F, S, and N, -0.5≤x≤+0.5, 0≤y≤0.5, and 0≤z≤0.1).

The thickness of the negative electrode current collector may range from about 3 *µ*m to about 500 *µ*m. The negative electrode current collector may not cause a chemical change in the secondary battery to be finally manufactured and may have high conductivity. The negative electrode current collector may include copper, stainless steel, aluminum, nickel, titanium, calcined carbon, and an aluminum-cadmium alloy. The negative electrode current collector may also include stainless steel surface-treated with carbon, nickel, titanium, or silver. A surface of the negative electrode current collector may include a fine uneven structure to increase the adhesion of the active material. The negative electrode current collector may have a shape such as a film, a sheet, a foil, a net, a porous material, a foam, or a nonwoven fabric.

The negative electrode active material may include, for example, carbon such as non-graphitizable carbon and graphite-based carbon. The negative electrode active material may include, for example, metal composite oxide such as LixFe2O3(0≤x≤1), LixWO2(0≤x≤1), SnxMel-xMe'yOz (here, Me is one of Mn, Fe, Pb, and Ge, Me' is one of Al, B, P, Si, an element of group 1, group 2, or group 3 of the periodic table, and a halogen, 0<x≤1, 1≤y≤3, and 1≤z≤8). The negative electrode active material may include, for example, lithium metal, a lithium alloy, a silicon-based alloy, or a tin-based alloy. The negative electrode active material may include, for example, metal oxide such as SnO, SnO2, PbO, PbO2, Pb2O3, Pb3O4, Sb2O3, Sb2O4, Sb2O5, GeO, GeO2, Bi2O3, Bi2O4, and Bi2O5. The negative electrode active material may include, for example, a conductive polymer such as polyacetylene and a Li-Co-Ni-based material.

The positive electrode sheet PS, the negative electrode sheet NS, and the separators SP may be wound on the surface of a mandrel. The positive electrode sheet PS, the negative electrode sheet NS, and the separators SP may be wound by a rewinder 19. The jelly roll JR may be provided as the positive electrode sheet PS, the negative electrode sheet NS, and the separators SP are wound on the mandrel, cut, and separated, and then a positive electrode tab PT and a negative electrode tab NT are welded to the separated winding structure. The positive electrode tab PT may be welded to an uncoated portion of a positive electrode, and the negative electrode tab NT may be welded to an uncoated portion of a negative electrode. The positive electrode tab PT and the negative electrode tab NT may be welded, for example, by ultrasonic welding, but are not limited thereto.

The processor 130 and/or the server 200 may be configured to obtain first process data and first inspection data corresponding to process P10 for manufacturing the jelly roll JR.

According to an example embodiment, the first process data may include at least one of information (for example, tension information of the positive electrode sheet PS, the negative electrode sheet NS, the separators SP and winding information of the rewinder 19) related to equipment performing process P10 for manufacturing the jelly roll JR and time at which process P10 is performed.

According to an example embodiment, the first inspection data may include measurement information obtained by measuring the dimensions of elements constituting the jelly roll JR by scanning, an image obtained by capturing the elements constituting the jelly roll JR through a vision machine, and state information of the jelly roll JR inspected based on at least one of the measurement information and the image. Here, the measurement information may include the dimensions (for example, thickness and width) of the positive electrode sheet PS, the negative electrode sheet NS, and the separators SP, the dimensions (for example, thickness and width) of the positive electrode tab PT and the negative electrode tab NT, a loading amount of a coating material on the electrode sheets PS and NS, the dimensions (for example, thickness and width) of an insulating material provided on the coating material, the dimensions (for example, thickness and width) of an overlapping section between the coating material and the insulating material, and information about mismatch between coating part lanes on upper surfaces of the electrode sheets PS and NS and coating part lanes on lower surfaces of the electrode sheets PS and NS. The image may include appearance images of the positive electrode sheet PS, the negative electrode sheet NS, and the separators SP captured and obtained through the vision machine and appearance images of the positive electrode tab PT and the negative electrode tab NT. The state information may include a determination of a quality of the jelly roll JR based on at least one of the measurement information and the image. For example, the state information may include at least one of information on whether a defect is present, which is determined based on the dimensions of the elements (for example, the positive electrode sheet PS, the negative electrode sheet NS, the separators SP, the positive electrode tab PT, the negative electrode tab NT, the coating material, and the insulating material) constituting the jelly roll JR, and information on defect types (for example, a pinhole defect, a crater defect, a line defect, a crack defect, a side ring defect, an island defect, a fold defect, a wrinkle defect, an indentation defect, and a dent defect) determined based on the appearance images of the elements constituting the jelly roll JR.

Subsequently, referring to FIGS. 1, 2, and 4, in process P20, the jelly roll JR may be loaded onto a tray 20. The jelly roll JR may be placed in a row and column on the tray 20. Accordingly, the jelly rolls JR may be arranged on the tray 20 in a matrix.

Subsequently, referring to FIGS. 1, 2, 4, and 5, in process P30, the jelly roll JR may be unloaded from the tray 20 and loaded onto the carrier 115a. The sub-equipment 110a may include a pick-and-place machine configured to move the jelly roll JR on the tray 20 to the carrier 115a.

The sub-equipment 110a may include data matrix readers 111a for reading a data matrix DM1 of the tray 20, the controller 113a, and the carrier 115a. The controller 113a may be configured to control capturing of the data matrix readers 111a and operation of the pick-and-place machine.

One of the data matrix readers 111a may be configured to detect the data matrix DM1 of the tray 20. When reading of the data matrix DM1 is successful, the data matrix reader 111a may be configured to transmit a signal indicating a tray ID to the controller 113a. The tray ID may include a plurality of symbols for distinguishing and/or identifying the tray 20. The tray ID may be used to distinguish the tray 20. Here, the symbol may collectively refer to signs, characters, and marks for representing a meaning.

The reading of the data matrix DM1 may include capturing an image including the data matrix DM1 and obtaining information included in the data matrix DM1 from the image. In addition, the reading of the data matrix DM1 may further include identifying the tray ID based on the information included in the data matrix DM1.

For example, the controller 113a may be configured to load a positive electrode lot ID and a positive electrode count from a server such as a manufacturing execution system (MES) with identification of the tray ID as a trigger. As another example, the controller 113a may be configured to load a negative electrode lot ID and a negative electrode count from the server such as the MES with identification of the tray ID as a trigger. Hereinafter, the present disclosure will be described with a focus on an example embodiment in which a positive electrode lot ID is used to generate a jelly roll ID. However, this is for illustrative purposes and the present disclosure is not limited thereto in any sense. Here, the positive electrode count and the negative electrode count represent an order in which a jelly roll is manufactured in winder equipment. The controller 113a may be configured to determine the coordinates of the jelly roll JR on a tray based on the operation of the pick-and-place machine.

According to an example embodiment, the controller 113a may be configured to generate (or assign) a jelly roll ID based on the positive electrode lot ID, the positive electrode count, the tray ID, and the tray coordinates. According to another example embodiment, the controller 113a may transmit the cell tracking data CTDa including the positive electrode lot ID, the positive electrode count, the tray ID, and the tray coordinates to the controller 120a. The controller 120a may be configured to generate (or assign) a jelly roll ID based on the transmitted cell tracking data CTDa. Here, the jelly roll ID may correspond to a virtual ID generated based on required data, not identified by data matrix detection.

Due to a characteristic of a semi-finished product, the jelly roll JR may not include an actual data matrix. Accordingly, the jelly roll ID assigned in an operation of being processed at a level of the jelly roll JR may be generated and managed on a facility network or a factory automation network and may be referred to as a virtual ID. According to example embodiments, the jelly roll ID may include a positive electrode lot ID, a positive electrode count, a tray ID, and tray coordinates.

Here, as the jelly roll JR is input into the sub-equipment 110a according to an arrangement of the jelly rolls JR on the tray 20, the symbol of the jelly roll ID representing the tray coordinates of the jelly roll ID may represent an input order of the jelly roll JR into the sub-equipment 110a. Since the sub-equipment 110a is a first stage of the assembly process, the input of the jelly roll JR into the sub-equipment 110a may also be referred to as the input of the jelly roll JR to the assembly process.

The controller 120a may transmit the jelly roll ID of the jelly roll JR to the processor 130 and/or the server 200. According to an example embodiment, the processor 130 and/or the server 200 may be configured to map the jelly roll ID obtained from the controller 120a with the first process data and the first inspection data of the jelly roll JR obtained in process P10. For example, the processor 130 and/or the server 200 may be configured to map an electrode lot ID of the jelly roll JR with the first process data and the first inspection data and map the jelly roll ID with the first process data and the first inspection data through the electrode lot ID used to generate the jelly roll ID. Another one of the data matrix readers 111a may be configured to detect a data matrix DM2a of the carrier 115a. Accordingly, that another one may be configured to identify a carrier ID of the carrier 115a from the data matrix DM2a of the carrier 115a. The carrier ID of the carrier 115a may include a plurality of symbols for distinguishing and/or identifying the carrier 115a. The carrier ID may be used to distinguish the carrier 115a.

When the pick-and-place machine picks up the jelly roll JR on the tray 20 and puts down the jelly roll JR on the carrier 115a, the data matrix DM1 of the tray 20 and the data matrix DM2a of the carrier 115a may be detected by the data matrix readers 111a of the sub-equipment 110a. The controller 113a may be configured to transmit the jelly roll ID to the controller 120a. The data matrix readers 111a may be configured to transmit the carrier ID of the carrier 115a to the controller 120a.

The controller 120a may be configured to collect the cell tracking data CTDa of the sub-equipment 110a. The cell tracking data CTDa may include data for obtaining the jelly roll ID of the jelly roll JR. For example, the cell tracking data CTDa may include a jelly roll ID generated by the sub-equipment 110a. In this case, the controller 120a may obtain the jelly roll ID by simply identifying the cell tracking data CTDa. As another example, the cell tracking data CTDa may include a positive electrode lot ID, a positive electrode count, a tray ID, and tray coordinates for generating a jelly roll ID. In this case, the controller 120a may generate the jelly roll ID of the jelly roll JR based on the positive electrode lot ID, the positive electrode count, the tray ID, and the tray coordinates included in the cell tracking data CTDa. The cell tracking data CTDa of the sub-equipment 110a may further include the carrier ID of the carrier 115a.

The cell tracking data CTDa may further include time data regarding time at which the jelly roll ID is generated and time at which the carrier ID is identified from the data matrix DM1a of the carrier 115a. In addition, the cell tracking data CTDa may further include time at which the carrier ID is matched with the jelly roll ID.

The controller 120a may be configured to match the carrier ID of the carrier 115a with the jelly roll ID of the jelly roll JR. According to an example embodiment, the controller 120a may be configured to match the jelly roll ID and the carrier ID by comparing the time at which the jelly roll ID is generated and the time at which the carrier ID is identified based on the cell tracking data CTDa. For example, if a time interval between the time at which the jelly roll ID is generated and the time at which the carrier ID is identified is within a preset threshold time value, the generated jelly roll ID and the identified carrier ID may be matched with each other. In contrast, if the time interval between the time at which the jelly roll ID is generated and the time at which the carrier ID is identified exceeds the preset threshold time value, the generated jelly roll ID may be matched with another carrier ID whose time interval is within the threshold time value.

When reading of the data matrix DM1 fails, the data matrix reader 111a may be configured to generate an unrecognized jelly roll ID. Accordingly, the cell tracking data CTDa may include the unrecognized jelly roll ID. The unrecognized jelly roll ID may be matched with the carrier ID of the carrier 115a.

The unrecognized jelly roll ID may have a different generation rule (or format) than the jelly roll ID, so that the unrecognized jelly roll ID may be easily distinguished from the jelly roll ID. As an example, a length of the unrecognized jelly roll ID may be different from a length of the jelly roll ID.

Similarly, when reading of the data matrix DM2a fails, an unrecognized carrier ID may be matched with the jelly roll ID. The unrecognized carrier ID may have a different generation rule (or format) than the carrier ID, so that the unrecognized carrier ID may be easily distinguished from the carrier ID. As an example, a length of the unrecognized carrier ID may be different from a length of the carrier ID.

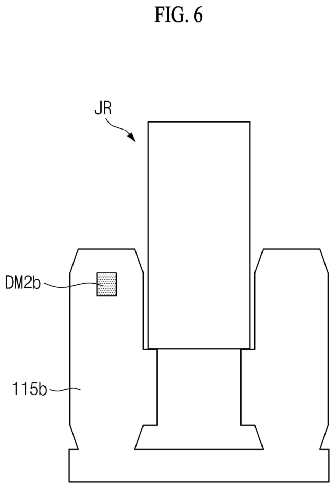

Subsequently, referring to FIGS. 1, 2, 5, and 6, in process P40, a lower insulator and the jelly roll JR may be coupled. The lower insulator may prevent unwanted short circuits between a cell case CC (see FIG. 6) described below and the jelly roll JR. The lower insulator and the jelly roll JR may be coupled by the sub-equipment 110b.

The sub-equipment 110b may include data matrix readers 111b and the controller 113b. The controller 113b may be configured to control capturing of the data matrix readers 111a and operation of equipment elements for coupling the lower insulator and the jelly roll JR.

The carrier 115a of the sub-equipment 110a may be configured to transfer the jelly roll JR to the sub-equipment 110b. The jelly roll JR may be moved from the carrier 115a of the sub-equipment 110a to the carrier 115b of the sub-equipment 110b, for example, by the pick-and-place machine.

The data matrix readers 111b may be configured to detect the data matrix DM2a of the carrier 115a and data matrix DM2b of the carrier 115b. One of the data matrix readers 111b may be configured to detect the data matrix DM2a of the carrier 115a, and one of the data matrix readers 111b may be configured to detect the data matrix DM2b of the carrier 115b. When reading of the data matrices DM2a and DM2b is successful, the data matrix readers 111b may be configured to transmit a signal indicating carrier IDs of the carriers 115a and 115b to the controller 120a. The controller 120a may identify the carrier IDs of the carriers 115a and 115b based on the transmitted signal. The carrier ID of the carrier 115b may include a plurality of symbols for distinguishing and/or identifying the carrier 115b. The carrier ID may be used to distinguish the carrier 115b.

The controller 120a may be configured to collect the cell tracking data CTDb of the sub-equipment 110b. The cell tracking data CTDb may include the carrier IDs of the carriers 115a and 115b. The cell tracking data CTDb may further include time data regarding time at which the carrier ID of the carrier 115a is identified and time at which the carrier ID of the carrier 115b is identified by the sub-equipment 110b. In addition, the cell tracking data CTDb may further include time at which the carrier IDs of the carriers 115a and 115b are matched with each other. When reading of one of the data matrices DM2a and DM2b fails, the cell tracking data CTDb may include an unrecognized jelly roll ID.

The controller 120a may be configured to match the carrier ID of the carrier 115a and the carrier ID of the carrier 115b. According to an example embodiment, the controller 120a may be configured to match the carrier IDs of the carriers 115a and 115b with each other by comparing the identification times of the carrier IDs based on the cell tracking data CTDb. For example, if a time interval between the identification times of the carrier IDs is within a preset threshold time value, the identified carrier IDs may be matched with each other. In contrast, if the time interval between the identification times of the carrier IDs exceeds the preset threshold time value, each of the identified carrier IDs may be matched with another carrier ID whose time interval is within the threshold time value. As a buffer of the controller 120a stores matching between the carrier ID of the carrier 115a and the jelly roll ID of the jelly roll JR, the controller 120a may be configured to match the jelly roll ID of the jelly roll JR with the carrier ID of the carrier 115b through the carrier ID of the carrier 115a.

The controller 120a may obtain second process data and second inspection data corresponding to process P40 targeting the jelly roll JR from the sub-equipment 110b.

According to an example embodiment, the second process data may include at least one of information related to equipment performing process P40 targeting the jelly roll JR, time at which process P40 is performed, and information related to the lower insulator coupled to the jelly roll JR.

According to an example embodiment, the second inspection data may include measurement information obtained by measuring the dimensions (for example, thickness and width) of the lower insulator coupled to the jelly roll JR by scanning, an image obtained by capturing the jelly roll JR and the lower insulator through a vision machine, and state information of the jelly roll JR and the lower insulator inspected based on at least one of the measurement information and the image. Here, the state information may include at least one of information on whether the lower insulator is defective determined based on the dimensions of the lower insulator and information about a defect type (for example, imprint defect in a lower portion of the jelly roll JR and defect in the in-tab or out-tab of an electrode of the jelly roll JR) determined based on appearance images of the jelly roll JR and the lower insulator.

The controller 120a may be configured to map the obtained second process data and second inspection data with the carrier ID of the carrier 115b. Accordingly, tracking of the second process data and the second inspection data may be provided based on the carrier ID and/or the jelly roll ID mapped with the carrier ID.

Subsequently, referring to FIGS. 1, 2, and 7, in process P50, the jelly roll JR may be inserted into the cell case CC. The process P50 may also be referred to as a can insertion process. The jelly roll JR may be inserted into the cell case CC by the sub-equipment 110c. The cell case CC may be a metal can. The cell case CC may be, for example, one of a cylindrical can or a prismatic can. Hereinafter, the present disclosure is described with a focus on an example embodiment in which the cell case CC is the cylindrical can. However, this is for illustrative purposes only and the present disclosure is not limited thereto in any sense. A person skilled in the art may easily reach an example in which the cell case CC is the prismatic can based on what is described herein.

The carrier 115b of the sub-equipment 110b may be configured to transfer the jelly roll JR to the sub-equipment 110c. The sub-equipment 110c may include data matrix readers 111c and the controller 113c. The controller 113c may be configured to control capturing of the data matrix readers 111c and the operation of equipment elements for inserting the jelly roll JR into the cell case CC.

The data matrix readers 111b may be configured to detect the data matrix DM2a of the carrier 115b and a data matrix DM3 of the cell case CC. When the reading of the data matrix DM2b is successful, the data matrix reader 111c may be configured to transmit a signal indicating the carrier ID of the carrier 115b to the controller 120a. The controller 120a may identify the carrier ID of the carrier 115b based on the transmitted signal. When reading of the data matrix DM3 is successful, the data matrix reader 111c may be configured to transmit a signal indicating a can ID of the cell case CC to the controller 120a.

The can ID of the cell case CC may include a plurality of symbols for distinguishing and/or identifying the cell case CC. In other words, the can ID may include information for identifying the cell case CC. The can ID may be used to distinguish the cell case CC. The can ID may include a symbol representing the coordinates of the cell case CC on a can tray. Accordingly, the can ID may include the tray coordinates.

In general, an input order of the cell case CC may be determined based on an arrangement of the cell cases CC on the can tray. In other words, as the cell case CC is input into the sub-equipment 110c according to the arrangement of the cell cases CC on the can tray, the symbol of the can ID representing the tray coordinates of the jelly roll ID may represent the input order of the jelly roll JR into the sub-equipment 110a.

The controller 120a may be configured to collect the cell tracking data CTDc of the sub-equipment 100c. The cell tracking data CTDc may include the carrier ID of the carrier 115b and the can ID of the cell case CC. The cell tracking data CTDc may further include time data regarding time at which the carrier ID of the carrier 115b is identified and time at which the can ID of the cell case CC is identified by the sub-equipment 110c. In addition, the cell tracking data CTDc may further include time matched to the jelly roll ID of the jelly roll JR and the can ID of the cell case CC.

The controller 120a may be configured to match the carrier ID of the carrier 115b with the can ID of the cell case CC. According to an example embodiment, the controller 120a may be configured to match the carrier ID of the carrier 115b with the can ID of the cell case CC by comparing the identification time of the carrier ID and the identification time of the can ID based on the cell tracking data CTDc. For example, if a time interval between the identification times of the carrier ID and the can ID is within a preset threshold time value, the identified carrier ID and the identified can ID may be matched with each other. In contrast, if the time interval between the identification times of the carrier ID and the can ID exceeds the preset threshold time value, the identified carrier ID may be matched with another can ID whose time interval is within the threshold time value. As the buffer of the controller 120a stores matching between the carrier ID of the carrier 115a and the jelly roll ID of the jelly roll JR (or, matching between the carrier ID of the carrier 115b and the jelly roll ID of the jelly roll JR), the controller 120a may be configured to match the jelly roll ID of the jelly roll JR with the can ID of the cell case CC through the carrier ID of the carrier 115a (or the carrier ID of the carrier 115b).

The cell tracking data CTDc of the sub-equipment 115c may further include the carrier ID of the carrier 115b matched with the jelly roll ID. When the reading of the data matrix DM2b fails, the data matrix reader 111b may be configured to transmit the unrecognized carrier ID to the controller 120a. The controller 120a may be configured to issue an unrecognized jelly roll ID in response to the reception of the unrecognized carrier ID, and the cell tracking data CTDc may include the unrecognized jelly roll ID.

When the reading of the data matrix DM3 fails, the data matrix reader 111b may be configured to transmit an unrecognized can ID to the controller 120a, and accordingly, the cell tracking data CTDc may include the unrecognized can ID.

Accordingly, some of the jelly roll IDs of the jelly roll JR may be matched with unrecognized can IDs, and some of the can IDs of the cell case CC may be matched with unrecognized jelly roll IDs.

The controller 120a may obtain third process data and third inspection data corresponding to process P50 targeting the jelly roll JR from the sub-equipment 110c.

According to an example embodiment, the third process data may include at least one of information related to equipment performing process P50 targeting the jelly roll JR, time at which process P50 is performed, and information related to the cell case CC into which the jelly roll JR is inserted.

According to an example embodiment, the third inspection data may include measurement information obtained by measuring the dimensions of the cell case CC by scanning, an image obtained by capturing the cell case CC through a vision machine, and state information of the cell case CC inspected based on at least one of the measurement information and the image. Here, the state information may include at least one of information on whether the cell case CC is defective determined based on the dimensions of the cell case CC and information on a defect type (for example, opening defect) determined based on an appearance image of the cell case CC.

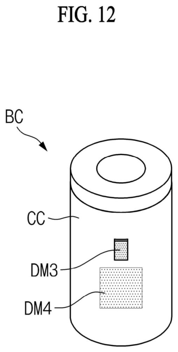

The controller 120a may be configured to map the obtained third process data and third inspection data with the can ID of the cell case CC. Accordingly, tracking of the third process data and the third inspection data may be provided based on at least one of the can ID, the carrier ID mapped with the can ID, and the jelly roll ID. In addition, historical data of semi-finished products for providing a battery cell BC (see FIG. 12) may be collected based on a data matrix on the cell case CC, and tracking of the secondary battery manufacturing process may be provided.

Hereinafter, processes P60 to P180 into which the cell case CC with the jelly roll JR inserted is input in the secondary battery manufacturing process will be described.

Subsequently, in process P60, the negative electrode tab NT (see FIG. 3) of the jelly roll JR and a negative electrode terminal of the cell case CC may be welded. The process P50 may also be referred to as a negative electrode tab welding process. The tab welding process may be resistance welding. By applying pressure to the negative electrode tab NT (see FIG. 3) of the jelly roll JR and the negative electrode terminal of the cell case CC with an electrode rod and applying voltage (or current) therebetween, the negative electrode tab NT (see FIG. 3) of the jelly roll JR and the cell case CC may be melt-welded. The negative electrode tab NT (see FIG. 3) of the jelly roll JR may be welded to the negative electrode terminal of the cell case CC by the sub-equipment 110d.

The sub-equipment 110d may include the data matrix reader 111d and the controller 113d. The controller 113d may be configured to control capturing of the data matrix reader 111d and the operation of equipment elements for welding the negative electrode tab NT (see FIG. 3) of the jelly roll JR to the negative electrode terminal of the cell case CC.

The data matrix reader 111d may be configured to detect the data matrix DM3 of the cell case CC. When the reading of the data matrix DM3 is successful, the data matrix reader 111d may be configured to transmit a signal indicating the can ID of the cell case CC to the controller 120a. The controller 120a may identify the can ID of the cell case CC based on the transmitted signal.

The controller 120a may be configured to collect the cell tracking data CTDd of the sub-equipment 110d. The cell tracking data CTDd may include the can ID of the cell case CC. The cell tracking data CTDd may further include time data regarding time at which the can ID of the cell case CC is identified by the sub-equipment 110d. In addition, the cell tracking data CTDd may further include time matched to the can ID of the cell case CC. When the reading of the data matrix DM3 fails, the cell tracking data CTDd of the sub-equipment 110d may include an unrecognized can ID of the cell case CC.

Subsequently, in process P70, a swaging process may be performed on the cell case. The sub-equipment 110d may further include a swaging tool configured to perform the swaging process on the cell case CC. In the swaging process, an upper portion of the cell case CC may be compression molded to reduce an outer diameter thereof. Here, the upper portion of the cell case CC may include an opening into which the jelly roll JR is inserted. A step portion may be formed on the cell case CC during the swaging process.

The controller 120a may obtain fourth process data and fourth inspection data corresponding to processes P60 and P70 targeting the jelly roll JR (or the cell case CC with the jelly roll JR inserted) from the sub-equipment 110d.

According to an example embodiment, the fourth process data may include at least one of information related to equipment performing processes P60 and P70 targeting the jelly roll JR (or the cell case CC with the jelly roll JR inserted), time at which processes P60 and P70 are performed, and information related to a set value (for example, pressure applied to the negative electrode terminal of the cell case CC, applied voltage (or current), welding position, the number of welding passes, and swaging mold information) used in processes P60 and P70.

According to an example embodiment, the fourth inspection data may include measurement information obtained by measuring the dimensions of the cell case CC by scanning, an image obtained by capturing the cell case CC through a vision machine, and state information of the cell case CC inspected based on at least one of the measurement information and the image. Here, the image may include at least one of an appearance image of the jelly roll JR captured and obtained through the vision machine before performing the negative electrode tab NT process, an appearance image of the jelly roll JR (or the cell case CC with the jelly roll JR inserted) captured and obtained through the vision machine after performing the negative electrode tab NT process, and an appearance image of the jelly roll JR (or the cell case CC with the jelly roll JR inserted) captured and obtained through the vision machine after performing the swaging process. The state information may include at least one of information on whether the cell case CC is defective determined based on the dimensions of the cell case CC and information about a defect type (for example, hole covering defect in the jelly roll JR, imprint defect in the jelly roll JR, and defect in the negative electrode tab NT) determined based on the appearance image of the jelly roll JR (or the cell case CC with the jelly roll JR inserted).

The controller 120a may be configured to map the obtained fourth process data and fourth inspection data with the can ID of the cell case CC. Accordingly, tracking of the fourth process data and the fourth inspection data may be provided based on at least one of the can ID, the carrier ID mapped with the can ID, and the jelly roll ID.

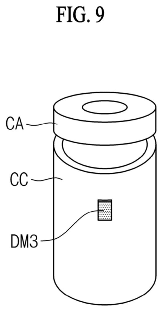

Subsequently, in process P80, an upper insulator may be inserted into the cell case CC. The upper insulator may prevent unwanted short circuits between a cap assembly CA (see FIG. 9) described below and the jelly roll JR.

The sub-equipment 110e may include the data matrix reader 111e and the controller 113e. The controller 113e may be configured to control capturing of the data matrix reader 111e and operation of equipment elements for inserting the upper insulator.

The data matrix reader 111e may be configured to detect the data matrix DM3 of the cell case CC. When the reading of the data matrix DM3 is successful, the data matrix reader 111e may be configured to transmit a signal indicating the can ID of the cell case CC to the controller 120b. The controller 120b may identify the can ID of the cell case CC based on the transmitted signal.

The controller 120b may be configured to collect the cell tracking data CTDe of the sub-equipment 110e. The cell tracking data CTDe may further include time data regarding time at which the can ID of the cell case CC is identified by the sub-equipment 110e. In addition, the cell tracking data CTDe may include the can ID of the cell case CC. The cell tracking data CTDe may further include time matched to the can ID of the cell case CC. When the reading of the data matrix DM3 fails, the cell tracking data CTDe may include an unrecognized can ID of the cell case CC.

The controller 120b may obtain fifth process data and fifth inspection data corresponding to process P80 targeting the jelly roll JR (or the cell case CC with the jelly roll JR inserted) from the sub-equipment 110e.

According to an example embodiment, the fifth process data may include at least one of information related to equipment performing process P80 targeting the jelly roll JR (or the cell case CC with the jelly roll JR inserted), time at which process P80 is performed, and information related to the upper insulator coupled to the jelly roll JR.

According to an example embodiment, the fifth inspection data may include measurement information obtained by measuring the dimensions (for example, thickness and width) of the upper insulator inserted into the cell case CC by scanning, an image obtained by capturing the jelly roll JR (or the cell case CC with the jelly roll JR inserted) and the upper insulator by a vision machine, and state information of the jelly roll JR (or the cell case CC with the jelly roll JR inserted) and the upper insulator inspected based on at least one of the measurement information and the image. Here, the state information may include at least one of information on whether the upper insulator is defective determined based on the dimensions of the upper insulator and information about a defect type determined based on appearance images of the jelly roll JR (or the cell case CC with the jelly roll JR inserted) and the upper insulator.

The controller 120b may be configured to map the obtained fifth process data and fifth inspection data with the can ID of the cell case CC. Accordingly, tracking of the fifth process data and the fifth inspection data may be provided based on the carrier ID and/or the jelly roll ID mapped with the carrier ID.

Subsequently, in process P90, a groove may be formed in the cell case CC. The groove may be used for seating a gasket to be described below. The process P90 may be referred to as beading. The groove of the cell case CC may be formed by the sub-equipment 110f.

The sub-equipment 110f may include the data matrix reader 111f and the controller 113f. The controller 113f may be configured to control capturing of the data matrix reader 111f and operation of a groove-forming tool on the cell case CC.

The data matrix reader 111f may be configured to detect the data matrix DM3 of the cell case CC. When the reading of the data matrix DM3 is successful, the data matrix reader 111f may be configured to transmit a signal indicating the can ID of the cell case CC to the controller 120b. The controller 120b may identify the can ID of the cell case CC based on the transmitted signal.

The controller 120b may be configured to collect the cell tracking data CTDf of the sub-equipment 110f. The cell tracking data CTDf may further include time data regarding time at which the can ID of the cell case CC is identified by the sub-equipment 110f. In addition, the cell tracking data CTDf may include the can ID of the cell case CC. The cell tracking data CTDf may further include time matched to the can ID of the cell case CC. When the reading of the data matrix DM3 fails, the cell tracking data CTDf may include an unrecognized can ID of the cell case CC.

The controller 120b may obtain sixth process data and sixth inspection data corresponding to process P90 targeting the jelly roll JR (or the cell case CC with the jelly roll JR inserted) from the sub-equipment 110f.

According to an example embodiment, the sixth process data may include at least one of information related to equipment performing process P90 targeting the jelly roll JR (or the cell case CC with the jelly roll JR inserted), time at which process P90 is performed, and information (for example, target shape and size of the groove and the number of grooves) related to the groove formed in the cell case CC.

According to an example embodiment, the sixth inspection data may include an image obtained by capturing the jelly roll JR (or the cell case CC with the jelly roll JR inserted) through a vision machine and state information of the jelly roll JR (or the cell case CC with the jelly roll JR inserted) inspected based on the image. Here, the state information may include information on a defect type (for example, a groove defect) determined based on an appearance image of the jelly roll JR (or the cell case CC with the jelly roll JR inserted).

The controller 120b may be configured to map the obtained sixth process data and sixth inspection data with the can ID of the cell case CC. Accordingly, tracking of the sixth process data and the sixth inspection data may be provided based on the carrier ID and/or the jelly roll ID mapped with the carrier ID.

Subsequently, in process P100, an X-RAY inspection may be performed on the cell case CC. The X-RAY inspection may be performed by the sub-equipment 110g. The arrangement and defect of electrodes may be inspected by the X-RAY inspection.

The sub-equipment 110g may include the data matrix reader 111g and the controller 113g. The controller 113g may be configured to control capturing of the data matrix reader 111g and operation of an X-RAY-based inspection machine.

The data matrix reader 111g may be configured to detect the data matrix DM3 of the cell case CC. When the reading of the data matrix DM3 is successful, the data matrix reader 111g may be configured to transmit a signal indicating the can ID of the cell case CC to the controller 120b. The controller 120b may identify the can ID of the cell case CC based on the transmitted signal.

The controller 120b may be configured to collect the cell tracking data CTDg of the sub-equipment 110g. The cell tracking data CTDg may further include time data regarding time at which the can ID of the cell case CC is identified by the sub-equipment 110g. In addition, the cell tracking data CTDg may include the can ID of the cell case CC. The cell tracking data CTDg may further include time matched to the can ID of the cell case CC. When the reading of the data matrix DM3 fails, the cell tracking data CTDg may include an unrecognized can ID of the cell case CC.

The controller 120b may obtain seventh process data and seventh inspection data corresponding to process P100 targeting the jelly roll JR (or the cell case CC with the jelly roll JR inserted) from the sub-equipment 110g.

According to an example embodiment, the seventh process data may include at least one of information related to equipment performing process P100 targeting the jelly roll JR (or the cell case CC with the jelly roll JR inserted) and time at which process P100 is performed.

According to an example embodiment, the seventh inspection data may include an X-RAY image of the jelly roll JR (or the cell case CC with the jelly roll JR inserted) and state information of the electrode inspected based on the X-RAY image. Here, the state information may include a defect type (for example, electrode arrangement defect, size defect, and electrode tab misalignment) determined based on the X-RAY image of the jelly roll JR (or the cell case CC with the jelly roll JR inserted).

The controller 120b may be configured to map the obtained seventh process data and seventh inspection data with the can ID of the cell case CC. Accordingly, tracking of the seventh process data and the seventh inspection data may be provided based on at least one of the can ID, the carrier ID mapped with the can ID, and the jelly roll ID.

Subsequently, referring to FIGS. 1, 2, and 8, in process P110, an electrolyte may be injected into the cell case CC. The process P110 may also be referred to as an electrolyte injection process. The electrolyte may be formed by the sub-equipment 110h.

The sub-equipment 110h may include the data matrix reader 111h, the controller 113h, and an electrolyte injector 117h. The controller 113h may be configured to control capturing of the data matrix reader 111h and operation of the electrolyte injector 117h. The electrolyte injector 117h may be configured to inject the electrolyte into the cell case CC by using vacuum, capillary phenomenon, and wetting phenomenon.

The data matrix reader 111h may be configured to detect the data matrix DM3 of the cell case CC. When the reading of the data matrix DM3 is successful, the data matrix reader 111h may be configured to transmit a signal indicating the can ID of the cell case CC to the controller 120c. The controller 120c may identify the can ID of the cell case CC based on the transmitted signal.

The controller 120c may be configured to collect the cell tracking data CTDh of the sub-equipment 110h. The cell tracking data CTDh may further include time data regarding time at which the can ID of the cell case CC is identified by the sub-equipment 110h. In addition, the cell tracking data CTDh may include the can ID of the cell case CC. The cell tracking data CTDh may further include time matched to the can ID of the cell case CC. When the reading of the data matrix DM3 fails, the cell tracking data CTDh may include an unrecognized can ID of the cell case CC.

The controller 120c may obtain eighth process data and eighth inspection data corresponding to process P110 targeting the jelly roll JR (or the cell case CC with the jelly roll JR inserted) from the sub-equipment 110h.

According to an example embodiment, the eighth process data may include at least one of information related to equipment performing process P110 targeting the jelly roll JR (or the cell case CC with the jelly roll JR inserted), time at which process P110 is performed, and information related to the electrolyte (for example, an electrolyte component and an injection amount).

According to an example embodiment, the eighth inspection data may include an image obtained by capturing the cell case CC through a vision machine and state information of the inspected cell case CC based on the image. Here, the state information may include an electrolyte impregnation degree determined based on an appearance image of the cell case CC.

The controller 120c may be configured to map the obtained eighth process data and eighth inspection data with the can ID of the cell case CC. Accordingly, tracking of the eighth process data and the eighth inspection data may be provided based on at least one of the can ID, the carrier ID mapped with the can ID, and the jelly roll ID.

Subsequently, referring to FIGS. 1, 2, and 9, in process P120, the positive electrode tab PT (see FIG. 3) of the jelly roll JR and a positive electrode terminal of a cap assembly case CA may be welded. The process P120 may also be referred to as a positive electrode tab welding process. The positive electrode tab PT (see FIG. 3) of the jelly roll JR may be welded to the positive electrode terminal of the cap assembly by the sub-equipment 110i.

The sub-equipment 110i may include the data matrix reader 111i and the controller 113i. The controller 113i may be configured to control capturing of the data matrix reader 111i and operation of a welding tool.

The data matrix reader 111i may be configured to detect the data matrix DM3 of the cell case CC. When the reading of the data matrix DM3 is successful, the data matrix reader 111i may be configured to transmit a signal indicating the can ID of the cell case CC to the controller 120c. The controller 120c may identify the can ID of the cell case CC based on the transmitted signal.

The controller 120c may be configured to collect the cell tracking data CTDi of the sub-equipment 110i. The cell tracking data CTDi may further include time data regarding time at which the can ID of the cell case CC is identified by the sub-equipment 110i. In addition, the cell tracking data CTDi may include the can ID of the cell case CC. The cell tracking data CTDi may further include time matched to the can ID of the cell case CC. When the reading of the data matrix DM3 fails, the cell tracking data CTDi may include an unrecognized can ID of the cell case CC.

The controller 120c may obtain ninth process data and ninth inspection data corresponding to process P120 targeting the jelly roll JR (or the cell case CC with the jelly roll JR inserted) from the sub-equipment 110i.

According to an example embodiment, the ninth process data may include at least one of information related to equipment performing process P120 targeting the jelly roll JR (or the cell case CC with the jelly roll JR inserted), time at which process P120 is performed, and information related to a set value (for example, pressure applied to the positive electrode terminal of the cell case CC, applied voltage (or current), welding position, the number of welding passes) used in process P120.

According to an example embodiment, the ninth inspection data may include measurement information obtained by measuring the dimensions of the cap assembly case CA by scanning, an image obtained by capturing the jelly roll JR (or the cell case CC with the jelly roll JR inserted) through a vision machine, and state information of the jelly roll JR (or the cell case CC with the jelly roll JR inserted) and the cap assembly case CA inspected based on at least one of the measurement information and the image. Here, the state information may include at least one of information on whether the cap assembly case CA is defective determined based on the dimensions of the cap assembly case CA and information about a defect type determined based on appearance images of the jelly roll JR (or the cell case CC with the jelly roll JR inserted) and the cap assembly case CA.

The controller 120c may be configured to map the obtained ninth process data and ninth inspection data with the can ID of the cell case CC. Accordingly, tracking of the ninth process data and the ninth inspection data may be provided based on at least one of the can ID, the carrier ID mapped with the can ID, and the jelly roll ID.

Subsequently, referring to FIGS. 1, 2, and 10, in process P130, the battery cell may be sealed. The process P130 may also be referred to as a crimping process. In the crimping process, by applying pressure to an upper portion of the battery cell BC including a gasket and various safety devices (positive temperature coefficient (PTC) device, safety vent, and current break), the battery cell BC may be sealed. Here, the upper portion of the battery cell BC may be a portion of the cell case CC in which the groove is formed in the beading process.

The sub-equipment 110j may include the data matrix reader 111j, the controller 113j, and a crimping tool 117j. The controller 113j may be configured to control capturing of the data matrix reader 111j and operation of the crimping tool 117j.

The data matrix reader 111j may be configured to detect the data matrix DM3 of the cell case CC. When the reading of the data matrix DM3 is successful, the data matrix reader 111j may be configured to transmit a signal indicating the can ID of the cell case CC to the controller 120c. The controller 120c may identify the can ID of the cell case CC based on the transmitted signal.

Subsequently, in process P140, the battery cell may be sized. By applying pressure to the battery cell BC in an axial direction (or a height direction), a total height of the battery cell BC may be adjusted (or reduced). The sizing of the battery cell may be performed by the sub-equipment 110j.

The controller 120c may be configured to collect the cell tracking data CTDj of the sub-equipment 110j. The cell tracking data CTDj may further include time data regarding time at which the can ID of the cell case CC is identified by the sub-equipment 110j. In addition, the cell tracking data CTDj may include the can ID of the cell case CC. The cell tracking data CTDj may further include time matched to the can ID of the cell case CC. When the reading of the data matrix DM3 fails, the cell tracking data CTDj may include an unrecognized can ID of the cell case CC.

The controller 120c may obtain tenth process data and tenth inspection data corresponding to processes P130 and P140 targeting the jelly roll JR (or the cell case CC with the jelly roll JR inserted) from the sub-equipment 110j.

According to an example embodiment, the tenth process data may include at least one of information related to equipment performing processes P130 and P140 targeting the jelly roll JR (or the cell case CC with the jelly roll JR inserted), time at which processes P130 and P140 are performed, information about the gasket that is seated in the groove, and information related to a set value (for example, pressure applied to the upper portion of the battery cell BC and the number of pressurizations during sealing and a target total height of the battery cell BC during sizing) used in processes P130 and P140.

According to an example embodiment, the tenth inspection data may include an image obtained by capturing the jelly roll JR (or the cell case CC with the jelly roll JR inserted) through a vision machine and state information of the jelly roll JR (or the cell case CC with the jelly roll JR inserted) inspected based on the image. Here, the state information may include information about a defect type determined based on an appearance image of the jelly roll JR (or the cell case CC with the jelly roll JR inserted).

The controller 120c may be configured to map the obtained tenth process data and tenth inspection data with the can ID of the cell case CC. Accordingly, tracking of the tenth process data and the tenth inspection data may be provided based on the carrier ID and/or the jelly roll ID mapped with the carrier ID.

Subsequently, referring to FIGS. 1, 2, and 11, in process P150, the battery cell BC may be cleaned. The cleaning of the battery cell BC may be performed by the sub-equipment 110k. The sub-equipment 110k may include a cleaning solution sprayer 117k configured to spray a cleaning solution.

Subsequently, in process P160, the battery cell BC may be inspected. The inspection of the battery cell BC may include, for example, an appearance inspection by a vision machine and a three-dimensional scanning of the battery cell BC. The battery cell BC may be inspected by the sub-equipment 1101.

The processor 130 and/or the server 200 may obtain eleventh process data and eleventh inspection data corresponding to process P160 targeting the battery cell BC from the sub-equipment 1101.

According to an example embodiment, the eleventh process data may include at least one of information related to equipment performing process P160 targeting the battery cell BC and time at which process P160 is performed.

According to an example embodiment, the eleventh inspection data may include at least one of measurement information obtained by measuring the dimensions of the battery cell BC by scanning, an image obtained by capturing the battery cell BC through a vision machine, and state information of the battery cell BC inspected based on at least one of the measurement information and the image. Here, the state information may include at least one of information on whether the battery cell BC is defective determined based on the dimensions of the battery cell BC and information about a defect type (for example, upper portion and/or lower portion slant defect and side defect) determined based on an appearance image of the battery cell BC.

The processor 130 and/or the server 200 may be configured to map the obtained eleventh process data and eleventh inspection data with the can ID of the cell case CC. Accordingly, tracking of the eleventh process data and the eleventh inspection data may be provided based on at least one of the can ID, the carrier ID mapped with the can ID, and the jelly roll ID.

Subsequently, referring to FIGS. 1, 2, and 12, in process P170, a data matrix DM4 may be formed in the battery cell BC. For example, the data matrix DM4 may be formed by a manner such as laser marking and ink jet marking. The data matrix DM4 may be formed by a marking machine 117m. The data matrix DM4 may include information about a lot ID of the battery cell BC. In other words, when a data matrix reader reads the data matrix DM4, a signal indicating the lot ID of the battery cell BC may be generated.

The lot ID of the battery cell BC may include a plurality of symbols for distinguishing and/or identifying the battery cell BC. In other words, the lot ID may include information for identifying the battery cell BC. The lot ID may be used to distinguish the battery cell BC.

The sub-equipment 110m may include data matrix readers 111m, the controller 113m, and the marking machine 117m. The controller 113m may be configured to control capturing of the data matrix reader 111m and operation of the marking machine 117m.

One of the data matrix readers 111m may be configured to detect the data matrix DM3 of the cell case CC. When the reading of the data matrix DM3 is successful, the data matrix reader 111m may be configured to transmit a signal indicating the can ID of the cell case CC to the controller 120d. The controller 120d may identify the can ID of the cell case CC based on the transmitted signal.

Another of the data matrix readers 111m may be configured to detect the data matrix DM4 formed by the marking machine 117m. When reading of the data matrix DM3 is successful, the data matrix reader 111m may be configured to transmit a signal indicating the lot ID of the battery cell BC to the controller 113m. The controller 113m may be configured to transmit the signal indicating the lot ID of the battery cell BC to the controller 120d. The controller 120d may identify the lot ID of the battery cell BC based on the transmitted signal.

The controller 120d may be configured to collect the cell tracking data CTDm of the sub-equipment 110m. The cell tracking data CTDm may include the can ID of the cell case CC and the lot ID of the battery cell BC. The cell tracking data CTDm may further include time data regarding time at which the can ID of the cell case CC is identified and time at which the lot ID of battery cell BC is identified by the sub-equipment 110m.

The controller 120d may be configured to match the can ID of the cell case CC with the lot ID of the battery cell BC. According to an example embodiment, the controller 120d may be configured to match the can ID of the cell case CC with the lot ID of the battery cell BC by comparing the identification time of the can ID and the identification time of the lot ID based on the cell tracking data CTDm. For example, if a time interval between the identification times of the can ID and the lot ID is within a preset threshold time value, the identified can ID and the identified lot ID may be matched with each other. In contrast, if the time interval between the identification times of the can ID and the lot ID exceeds the preset threshold time value, the identified can ID may be matched with another lot ID whose time interval is within the threshold time value.

The cell tracking data CTDm may further include time matched to the can ID of the cell case CC. When the reading of the data matrix DM3 fails, the cell tracking data CTDm may include an unrecognized can ID of the cell case CC. When the reading of the data matrix DM4 fails, the cell tracking data CTDm may include an unrecognized lot ID of the cell case CC.

Subsequently, in process P180, an internal resistance of the battery cell BC may be measured. The internal resistance of the battery cell BC may be determined based on an open circuit voltage of the battery cell BC. The internal resistance of the battery cell BC may be measured by the sub-equipment 110n.

The sub-equipment 110n may include the data matrix reader 111n and the controller 113n. The controller 113n may be configured to control capturing of the data matrix reader 111n and operation of a jig and a measuring device for measuring the internal resistance of the battery cell BC.

The data matrix reader 111n may be configured to detect the data matrix DM3 of the cell case CC. When the reading of the data matrix DM3 is successful, the data matrix reader 111n may be configured to transmit a signal indicating the can ID of the battery cell BC to the controller 120d. The controller 120d may identify the can ID of the cell case CC based on the transmitted signal.

The controller 120d may be configured to collect the cell tracking data CTDn of the sub-equipment 110n. The cell tracking data CTDn may include the can ID of the battery cell BC. The cell tracking data CTDn may further include time matched to the can ID of the battery cell BC. When the reading of the data matrix DM3 fails, the cell tracking data CTDn may include an unrecognized can ID of the cell case CC.

The controller 120d may obtain twelfth inspection data corresponding to process P180 targeting the battery cell BC from the sub-equipment 110n. Here, the twelfth inspection data may include information related to a result of internal resistance measurement targeting the battery cell BC. For example, the twelfth inspection data may include a state measurement value (for example, the open circuit voltage and the internal resistance) of the battery cell BC and information related to whether the battery cell BC is abnormal inspected based on the state measurement value.

The controller 120d may be configured to match the obtained twelfth inspection data with the can ID of the cell case CC. Accordingly, tracking of the twelfth inspection data may be provided based on at least one of the can ID, the carrier ID matched with the can ID, and the jelly roll ID.

As described above, the assembly process of the battery cell may be tracked through the jelly roll ID, the carrier ID, the can ID, and the lot ID. In other words, the battery cell BC after shipment may provide the lot ID based on the reading of the data matrix DM4, and tracking of historical data of the sub-processes of the assembly process may be provided based on the lot ID.

More specifically, the sub-processes performed by the pieces of sub-equipment 110a, 110b, and 110c may be tracked by the jelly roll ID, and the jelly roll ID may be matched to the can ID by the cell tracking data CTDc of the sub-equipment 110c. The sub-processes performed by the pieces of sub-equipment 110c, 110d, 110e, 110f, 110g, 110h, 110i, 110j, 110m, and 110n may be tracked by the can ID, and the can ID may be matched to the lot ID by the cell tracking data of the sub-equipment 110n.

The controllers 120a, 120b, 120c, and 120d may be configured to collect the cell tracking data CTDa, CTDb, CTDc, CTDd, CTDe, CTDf, CTDg, CTDh, CTDi, CTDj, CTDm, and CTDn from the controllers 113a, 113b, 113c, 113d, 113e, 113f, 113g, 113h, 113i, 113j, 113m, and 113n. More specifically, the controller 120a may be configured to collect the cell tracking data CTDa, CTDb, CTDc, and CTDd collected from the controllers 113a, 113b, 113c, and 113d, and the controller 120b may be configured to collect the cell tracking data CTDe, CTDf, and CTDg collected from the controllers 113e, 113f, and 113g, and the controller 120c may be configured to collect the cell tracking data CTDh, CTDi, and CTDj collected from the controllers 113h, 113i, and 113j, and the controller 120d may be configured to collect the cell tracking data CTDm and CTDn collected from the controllers 113m and 113n.

The controllers 120a, 120b, 120c, and 120d may perform the function of a network hub. The allocation of the cell tracking data CTDa, CTDb, CTDc, CTDd, CTDe, CTDf, CTDg, CTDh, CTDi, CTDj, CTDm, and CTDn collected from the controllers 113a, 113b, 113c, 113d, 113e, 113f, 113g, 113h, 113i, 113j, 113m, and 113n illustrated in FIG. 2 is for illustrative purposes, and the present disclosure is not limited thereto in any sense.

Each of the controllers 113a, 113b, 113c, 113d, 113e, 113f, 113g, 113h, 113i, 113j, 113m, and 113n and the controllers 120a, 120b, 120c, and 120d may be a programmable logic controller (PLC). The PLC is a special type of microprocessor-based controller that uses a programmable memory to store instructions and implements a function such as logic, sequencing, timing, counting, and arithmetic to control machines and processes. The PLC is easy to operate and program.

Each of the controllers 113a, 113b, 113c, 113d, 113e, 113f, 113g, 113h, 113i, 113j, 113m, and 113n and the controllers 120a, 120b, 120c, and 120d may include a power supply, a central processing unit (CPU), an input interface, an output interface, a communication interface, and memory devices. The power supply may be configured to supply power to other elements of the controller, such as the CPU, the input interface, the output interface, the communication interface, and the memory devices, for operation of the controller. The memory devices may include a read only memory (ROM) configured to store a system program such as an operating system and a random access memory (RAM) configured to store a user program and data, such as state information of input and output devices and values of a timer, a counter, and other internal devices. The CPU may be configured to control communication between modules that implement logic and convert input signals into output operation signals. The CPU may operate based on the system program and the user program stored in the memory devices. The CPU may be configured to write or read inspection data and measurement data to and from data areas of the memory devices based on the system program and the user program. Conditions or data of industrial apparatuses and production processes may be transmitted to the CPU through the input module. A result processed by the CPU may be transmitted to an actuator through the output module. The communication interface may be configured to relay data transmission and reception between the controller and other network elements.

However, the present disclosure is not limited thereto, and each of the controllers 113a, 113b, 113c, 113d, 113e, 113f, 113g, 113h, 113i, 113j, 113m, and 113n and the controllers 120a, 120b, 120c, and 120d may include one of a simple controller, a complex processor such as a microprocessor, a CPU, and a graphics processing unit (GPU), a processor configured by software, dedicated hardware, and firmware. The controller may be implemented by, for example, a general-purpose computer or application-specific hardware such as a digital signal processor (DSP), a field programmable gate array (FPGA), and an application specific integrated circuit (ASIC).

The processor 130 may be configured to receive the cell tracking data CTDa, CTDb, CTDc, CTDd, CTDe, CTDf, CTDg, CTDh, CTDi, CTDj, CTDm, and CTDn from the controllers 120a, 120b, 120c, and 120d. The processor 130 may be configured to collect the cell tracking data from the controllers 120a, 120b, 120c, and 120d.

The processor 130 may be configured to store a log file including at least one of the jelly roll ID, the carrier ID, the can ID, and the lot ID. The log file including at least one of the jelly roll ID, the carrier ID, the can ID, and the lot ID may include, for example, a log file of the data matrix readers 111a, 111b, 11111d, 111e, 111f, 111g, 111h, 111i, 111j, 111m, and 111n, a trigger log file of the controllers 120a, 120b, 120c, and 120d, an NG code log file, and an equipment data log file.

The processor 130 may be configured to generate a log file for a server based on the log file including at least one of the jelly roll ID, the carrier ID, the can ID, and the lot ID. The log file for the server may include logs of the data matrix readers 111a, 111b, 111c, 111d, 111e, 111f, 111g, 111h, 111i, 111j, 111m, and 111n, trigger logs of the controllers 120a, 120b, 120c, and 120d, NG code logs, and equipment data logs.

The log file for the server may have a format accessible from the server 200. The log file for the server may conform to the Hypertext Transfer Protocol (HTTP). The log file for the server may have, for example, a hypertext markup language (HTML) format.

The processor 130 may be configured to transmit the cell tracking data CTDa, CTDb, CTDc, CTDd, CTDe, CTDf, CTDg, CTDh, CTDi, CTDj, CTDm, and CTDn to the server 200. The server 200 may be configured to store the cell tracking data CTDa, CTDb, CTDc, CTDd, CTDe, CTDf, CTDg, CTDh, CTDi, CTDj, CTDm, and CTDn. The server 200 may be configured to store matching between different IDs used in each phase of the assembly process, such as the jelly roll ID, the carrier ID, the can ID, and the lot ID, and accordingly, tracking of historical data of the assembly process of the secondary battery of the product during manufacturing or after shipment may be provided.

The server 200 may include a physical server or a cloud server. The server 200 may be implemented as a virtual server, but is not limited thereto. The server 200 may provide data and analysis results to an operator through various frameworks. The framework may include a protocol supporting data transmission so that a client device may visualize data through a user interface and provide updated visualizations when the data is calculated by the server 200. The protocol supporting the data transmission may use HTML, JavaScript, and/or JavaScript Object Notation (JSON).

The server 200 may include various application programming interfaces (APIs) for storing data in databases and other data management tools. The APIs may also be used to retrieve data from databases of various data management systems. The data management system may provide access to the database, pull data or retrieve data from the database, and generate metrics. Here, the metrics are tools for visualizing data. The metrics include measurements generated in time series and may be used to monitor an application and generate a status alert.

According to an example embodiment, the server 200 may be configured to obtain a roll map of the jelly roll JR from an electrode manufacturing system (not shown) that performs an electrode manufacturing process prior to the secondary battery assembly process.

Here, the electrode manufacturing process may be a process of manufacturing the jelly roll JR through a mixing process of mixing various raw materials for electrode manufacturing, a coating process of applying an active material and a predetermined insulating material to the surface of a metal electrode plate, which is a current collector, to form a positive electrode and a negative electrode, a rolling process of rolling the coated electrode, and a slitting process of cutting the rolled electrode to the specifications of the jelly roll JR. In the mixing process, coating process, rolling process, and slitting process, the electrode may be wound between an unwinder and a rewinder and may proceed in a roll-to-roll state. The roll map may be represented in the form of a bar that simulates the electrode progress in each of a plurality of sub-processes included in the electrode manufacturing process. On the roll map, the longitudinal dimensions of the electrode may be shown as coordinates, and information about the quality of the electrode may be shown together with the corresponding coordinates. For example, electrode appearance information obtained by an image-based inspection device such as a vision machine, information on short circuits and joints of the electrode, information on an electrode portion where sampling inspection is performed, information on an electrode portion scheduled for scraping, information on a scraped electrode portion, information on whether a coating material and an insulating material on the electrode are defective, and information on a defect type (for example, pinhole defect, crater defect, line defect, crack defect, side ring defect, island defect, fold defect, wrinkle defect, dent defect, and imprint defect) of the electrode may be shown on the roll map together with the corresponding coordinates.

The server 200 may be configured to map the cell ID corresponding to the semi-finished cell with the roll map. According to an example embodiment, the server 200 may be configured to map the jelly roll ID of the jelly roll JR with the roll map.

For example, the server 200 may be configured to map the jelly roll ID with the roll map based on the electrode lot ID of the jelly roll JR. The server 200 may be configured to obtain the electrode lot ID of the jelly roll JR from the electrode manufacturing system (not shown). Furthermore, the server 200 may be configured to further obtain mapping between the electrode lot ID of the jelly roll JR and the roll map from the electrode manufacturing system (not shown). The electrode manufacturing system (not shown) may be configured to generate the electrode lot ID of the jelly roll JR and generate the roll map based on the electrode progress of the jelly roll JR in the electrode manufacturing process. In addition, the electrode manufacturing system (not shown) may be configured to map the electrode lot ID of the jelly roll JR and the roll map with each other and transmit mapping between the electrode lot ID and the roll map to the server 200.

Since the jelly roll ID of the jelly roll JR is generated based on the electrode lot ID loaded from the server 200 by the controller 113a as described above, the server 200 may be configured to map the jelly roll ID and the roll map through the electrode lot ID. Subsequently, the server 200 may be configured to map the roll map with at least one of the carrier ID, the can ID, and the lot ID matched with the jelly roll ID. Accordingly, tracking of the roll map may be provided based on at least one of the jelly roll ID, the carrier ID, the can ID, and the lot ID mapped with the roll map.

According to an example embodiment, the server 200 may be configured to obtain activation data of the battery cell BC from an activation system (not shown) that performs an activation process after the secondary battery assembly process.

Here, the activation process may be a process of stabilizing a battery structure and imparting battery characteristics to the battery cell BC manufactured through the assembly process through a plurality of sub-processes such as aging, charging, and discharging. The activation data may include settings data related to set values (for example, aging temperature and charging/discharging state of charge (SOC)) used in the plurality of sub-processes included in the activation process, state data related to a state (for example, voltage, current, temperature, and SOC) of the battery cell BC obtained during the activation process, and diagnosis data for diagnosing an abnormality (for example, a low voltage and an internal short circuit) of the battery cell BC based on the state data.

According to an example embodiment, the server 200 may be configured to obtain the activation data from the activation system (not shown). Furthermore, the server 200 may be configured to further obtain mapping between the activation data and the can ID and/or the lot ID of the battery cell BC from the activation system (not shown). The activation system (not shown) may be configured to identify the can ID and/or lot ID of the battery cell BC that is a target of the activation process and generate the activation data of the battery cell BC of the activation process. In addition, the activation system (not shown) may be configured to map the can ID and/or the lot ID of the battery cell BC with the activation data and transmit the mapping between the can ID and/or the lot ID and the activation data to the server 200. Since the can ID and/or the lot ID of the battery cell BC are identified by the secondary battery manufacturing system 1000 and mapped with the process data and the ID (for example, the jelly roll ID and the carrier ID) of the previous process as described above, tracking of the activation data of the battery cell BC may be provided based on at least one of the jelly roll ID, the carrier ID, the can ID, and the lot ID.

The processor 130 and the server 200 may be implemented in hardware, firmware, software, and a combination thereof. For example, the processor 130 and the server 200 may include a computing device such as a workstation computer, a desktop computer, a laptop computer, and a tablet computer. The processor 130 and the server 200 may include one of a simple controller, a microprocessor, a complex processor such as a central processing unit (CPU) and a graphic processing unit (GPU), a processor configured by software, dedicated hardware, and firmware. The processor 130 and the server 200 may be implemented by, for example, a general-purpose computer or application-specific hardware such as a digital signal processor (DSP), a field programmable gate array (FPGA), and an application-specific integrated circuit (ASIC).

The operations of the processor 130 and the server 200 may be implemented by instructions stored in a machine-readable medium that may be read and executed by one or more processors. Here, the machine-readable medium may include any mechanism for storing and/or transmitting information in a form readable by a machine (for example, a computing device). For example, the machine-readable medium may include read-only memory (ROM), random access memory (RAM), a magnetic disk storage medium, an optical storage medium, flash memory, electric, optical, acoustic, or other forms of radio signals (for example, carrier waves, infrared signals, and digital signals) and any other signals. The processor 130 and the server 200 may be configured with firmware, software, routines, and instructions for performing the operations described above or any of the processes described below. For example, the processor 130 and the server 200 may be instantiated in memory.

The secondary battery manufacturing system 1000 may implement a plug-in architecture with an API for data acquisition to provide plug-and-play connectivity of a sensor, a measuring instrument, and an inspection machine. Accordingly, a resource at a specific process operation and a specific site may be easily transferred to other processes and other sites, or new resources may be easily introduced to each process operation and site.

In some example embodiments, the secondary battery manufacturing system 1000 may further include a manual input system that allows an operator to input manufacturing data. The secondary battery manufacturing system 1000 may allow an operator to input data using an input tool and computer-based input of manufacturing data, such as scraping an Excel file. The manual input system may be, for example, human-machine interfaces (HMIs) of supervisory control and data acquisition (SCADA). The SCADA may generally include a combination of software and hardware, such as remote terminal units (RTUs) and PLCs. The HMI is a screen that supports communication between an operator and a SCADA system and is a major element of the SCADA system. For example, manual input by the HMI may include selecting a defect type and reflecting performance upon completion.

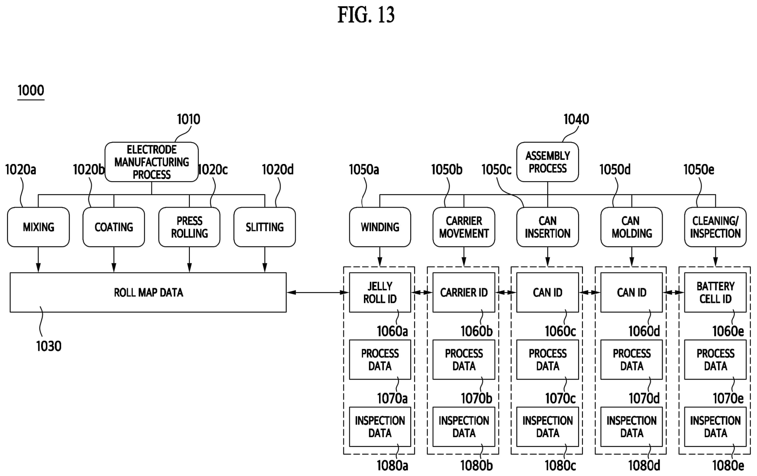

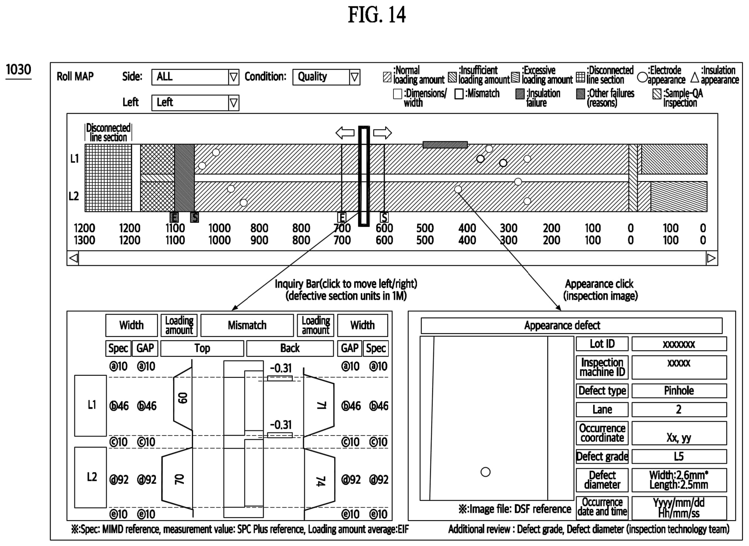

FIG. 13 is a diagram for illustrating a method of managing data by the secondary battery manufacturing system 1000 according to example embodiments. FIG. 14 is a diagram showing roll map data illustrated in FIG. 13.

Referring to FIGS. 13 and 14, the secondary battery manufacturing system 1000 may be configured to map and manage roll map data 1030 collected based on an electrode manufacturing process 1010 and data 1060a, 1060b, 1060c, 1060d, 1060e, 1070a, 1070b, 1070c, 1070d, 1070e, 1080a, 1080b, 1080c, 1080d, and 1080e collected based on an assembly process 1040.

According to an example embodiment, the secondary battery manufacturing system 1000 may be configured to obtain the roll map data 1030 based on the electrode manufacturing process 1010. The roll map data 1030 may be data represented in the form of a bar by simulating the electrode progress in a mixing process 1020a, a coating process 1020b, a rolling process 1020c, and a slitting process 1020d included in the electrode manufacturing process 1010.

According to an example embodiment, the secondary battery manufacturing system 1000 may be configured to obtain identification data 1060a, 1060b, 1060c, 1060d, and 1060e, process data 1070a, 1070b, 1070c, 1070d, and 1070e, and inspection data 1080a, 1080b, 1080c, 1080d, and 1080e of a semi-finished product based on the assembly process 1040.

According to an example embodiment, based on a winding process 1050a (for example, process P10 of FIG. 1) included in the assembly process 1040m, the secondary battery manufacturing system 1000 may be configured to obtain a jelly roll ID 1060a of the jelly roll JR and the process data 1070a and the inspection data 1080a of the winding process 1050a. In this case, the process data 1070a and the inspection data 1080a may be mapped with the jelly roll ID 1060a.

According to an example embodiment, the secondary battery manufacturing system 1000 may be configured to map the jelly roll ID 1060a with the roll map data 1030. Accordingly, tracking of the roll map data 1030, the process data 1070a, and the inspection data 1080a may be provided based on the jelly roll ID 1060a.

According to an example embodiment, based on a carrier movement process 1050b (for example, processes P30 and P40 of FIG. 1) included in the assembly process 1040, the secondary battery manufacturing system 1000 may be configured to obtain a carrier ID 1060b of the carrier and the process data 1070b and the inspection data 1080b of the carrier movement process 1050b. In this case, the process data 1070b and the inspection data 1080b may be mapped with the carrier ID 1060b.

According to an example embodiment, the secondary battery manufacturing system 1000 may be configured to match the carrier ID 1060b with the jelly roll ID 1060a. Accordingly, tracking of the roll map data 1030, the process data 1070a and 1070b, and the inspection data 1080a and 1080b may be provided based on at least one of the jelly roll ID 1060a and the carrier ID 1060b.

According to an example embodiment, based on a can insertion process 1050c (for example, process P50 of FIG. 1) included in the assembly process 1040, the secondary battery manufacturing system 1000 may be configured to obtain a can ID 1060c of the cell case CC and the process data 1070c and the inspection data 1080c of the can insertion process 1050c. In this case, the process data 1070c and the inspection data 1080c may be mapped with the can ID 1060c.

According to an example embodiment, the secondary battery manufacturing system 1000 may be configured to match the can ID 1060c with the carrier ID 1060b. Accordingly, tracking of the roll map data 1030, the process data 1070a, 1070b, and 1070c, and the inspection data 1080a, 1080b, and 1080c may be provided based on at least one of the jelly roll ID 1060a, the carrier ID 1060b, and the can ID 1060c.

According to an example embodiment, based on a can molding process 1050d (for example, processes P60 to P140 of FIG. 1) included in the assembly process 1040, the secondary battery manufacturing system 1000 may be configured to obtain a can ID 1060d of the cell case CC and the process data 1070d and the inspection data 1080d of the can molding process 1050d. In this case, the process data 1070d and the inspection data 1080d may be mapped with the can ID 1060d.

Meanwhile, since the can ID 1060c and the can ID 1060d are identical to each other, tracking of the roll map data 1030, the process data 1070a, 1070b, 1070c, and 1070d, and the inspection data 1080a, 1080b, 1080c, and 1080d may be provided based on at least one of the jelly roll ID 1060a, the carrier ID 1060b, and the can ID 1060c without separate ID matching.

According to an example embodiment, based on a cleaning/inspection process 1050e (for example, processes P150 to P180 of FIG. 1) included in the assembly process 1040, the secondary battery manufacturing system 1000 may be configured to obtain a battery cell ID 1060e (for example, a lot ID) of the battery cell BC and the process data 1070e and the inspection data 1080e of the cleaning/inspection process 1050e. In this case, the process data 1070e and the inspection data 1080e may be mapped with the battery cell ID 1060e.

According to an example embodiment, the secondary battery manufacturing system 1000 may be configured to match the battery cell ID 1060e with the can ID 1060c. Accordingly, tracking of the roll map data 1030, the process data 1070a, 1070b, 1070c, 1070d, and 1070e, and the inspection data 1080a, 1080b, 1080c, 1080d, and 1080e may be provided based on at least one of the jelly roll ID 1060a, the carrier ID 1060b, the can ID 1060c, and the battery cell ID 1060e.

### (Third and Fourth Examples)

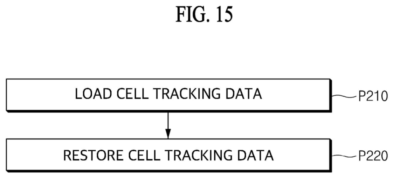

FIG. 15 is a flowchart for illustrating a method of managing the cell tracking data CTDc according to example embodiments.

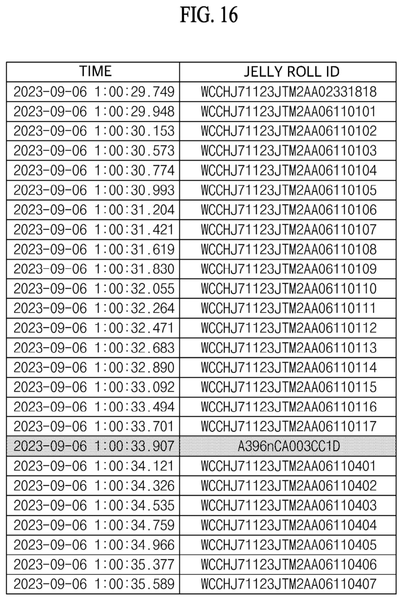

FIG. 16 is a diagram for illustrating a method of managing the cell tracking data CTDc according to example embodiments. More specifically, FIG. 16 shows a portion of the cell tracking data CTDc including a jelly roll ID.

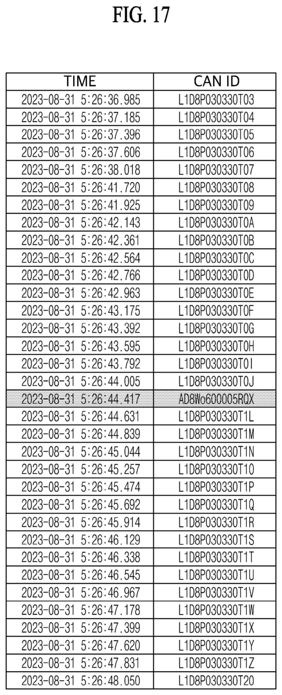

FIG. 17 is a diagram for illustrating a method of managing the cell tracking data CTDc according to example embodiments. More specifically, FIG. 17 shows a portion of the cell tracking data CTDc that includes a can ID.

Referring to FIGS. 1, 2, and 5, and FIGS. 15 to 17, restoring an unrecognized jelly roll ID and an unrecognized can ID may be performed by the server 200. The server 200 may include a logic for restoring the unrecognized jelly roll ID and the unrecognized can ID. The logic may operate based on a preset management cycle of the cell tracking data CTDc.

The cell tracking data CTDc may be loaded in operation P210. An unrecognized ID restoration logic may include a query for retrieving and/or loading a portion of the cell tracking data CTDc including the unrecognized jelly roll ID or the unrecognized can ID from a database of the server 200.

Subsequently, the cell tracking data CTDc may be restored in operation P220. Restoring the cell tracking data may include restoring the unrecognized jelly roll ID of the cell tracking data CTDc collected in process P50 or restoring the unrecognized can ID of the cell tracking data CTDc collected in process P50.

Referring to FIGS. 1, 2, 5, 15, and 16, the unrecognized jelly roll ID of the cell tracking data CTDc may be restored based on a jelly roll ID temporally adjacent to an unrecognized ID. According to example embodiments, the unrecognized jelly roll ID may be restored based on a jelly roll ID preceding the unrecognized jelly roll ID. According to example embodiments, the unrecognized jelly roll ID may be restored based on a jelly roll ID following the unrecognized jelly roll ID. According to example embodiments, the unrecognized jelly roll ID may be restored based on the jelly roll ID preceding the unrecognized jelly roll ID and the jelly roll ID following the unrecognized jelly roll ID.

Here, the unrecognized jelly roll ID and the jelly roll ID being temporally adjacent to each other may indicate that no jelly roll ID matched to a third time, which is between a first time matched to the unrecognized jelly roll ID and a second time matched to the jelly roll ID, is present in the cell tracking data CTDc. In other words, in the time alignment of the cell tracking data CTDc, when the jelly roll ID is arranged right next to the unrecognized jelly roll ID, the jelly roll ID of the unrecognized jelly roll ID may be referred to as temporally adjacent thereto.

As described above, the jelly roll ID may be generated based on the positive electrode lot ID, the positive electrode count, the tray ID, and the tray coordinates. The last four symbols of the jelly roll ID may represent a row coordinate and a column coordinate on the tray 20. Other symbols of the jelly roll ID may represent the positive electrode lot ID, the positive electrode count, and the tray ID. The "A396Nca0003CC1D" highlighted in shade in the table of FIG. 14 may have a different format from the jelly roll ID and may be an unrecognized jelly roll ID.

Since the jelly rolls JR are arranged in a matrix on the tray 20 and are sequentially input into the sub-equipment 110a, the jelly roll IDs that are temporally adjacent may be derived from the jelly rolls JR to be arranged adjacently on the tray 20. Accordingly, the unrecognized jelly roll ID "A396Nca0003CC1D" may be restored based on the preceding jelly roll ID "WCCHJ71123JTM2AA06110117" and/or the following jelly roll ID "WCCHJ71123JTM2AA06110401".

In this example, the jelly rolls JR on the tray 20 may be arranged in an 18×18 matrix. The last four symbols in the jelly roll ID "WCCHJ71123JTM2AA06110117" and the jelly roll ID "WCCHJ71123JTM2AA06110401" represent the coordinates of the jelly roll JR on the tray 20. More specifically, the last four symbols "0117" of the jelly roll ID "WCCHJ71123JTM2AA06110117" indicate that the jelly roll ID is derived from the jelly roll JR located in a seventeenth column of a first row of the tray 20, and the last four symbols "0401" of the jelly roll ID "WCCHJ71123JTM2AA06110401" indicate that the jelly roll ID is derived from the jelly roll JR located in a first column of a fourth row of the tray 20. Meanwhile, since the jelly rolls JR are arranged on the tray 20 in the 18×18 matrix, as shown in FIG. 16, it may be understood that no jelly roll ID derived from the jelly roll JR located in an eighteenth column of the first row of the tray 20 is present. Therefore, it may be understood that the jelly roll ID of the jelly roll JR located in the seventeenth column of the first row of the tray 20 is adjacent to a jelly roll ID of the jelly roll JR located in the eighteenth column of the first row of the tray 20.

Accordingly, since the unrecognized jelly roll ID "A396Nca0003CC1D" may be restored based on a temporally adjacent jelly roll ID, as shown in FIG. 16, it may be identified that the jelly roll JR corresponding to the jelly roll ID "WCCHJ71123JTM2AA06110401" is arranged in a different row on the tray 20 from the jelly roll JR corresponding to the unrecognized jelly roll ID "A396Nca0003CC1D", and the jelly roll JR corresponding to the jelly roll ID "WCCHJ71123JTM2AA06110117" is arranged in the same row on the tray 20 as the jelly roll JR corresponding to the unrecognized jelly roll ID "A396Nca0003CC1D". Accordingly, the unrecognized jelly roll ID "A396Nca0003CC1D" may be restored as "WCCHJ71123JTM2AA06110118".

In other words, restoring an unrecognized jelly roll ID may include changing a symbol representing the coordinates on the tray 20 (or an input order in the assembly process) among adjacent jelly roll IDs to adjacent coordinates. According to example embodiments, restoring the unrecognized jelly roll ID may include changing a symbol representing the coordinates on the tray 20 (or an input order in the assembly process) among adjacent jelly roll IDs to preceding coordinates (or order). According to example embodiments, restoring the unrecognized jelly roll ID may include changing a symbol representing the coordinates on the tray 20 (or an input order in the assembly process) among adjacent jelly roll IDs to following coordinates (or order).

While restoring the unrecognized jelly roll ID derived from an example embodiment in which the jelly rolls JR are placed in an 18×18 arrangement on the tray 20 is described above, this is merely an example, and the present disclosure is not limited thereto in any sense. A person skilled in the art may easily reach restoring an unrecognized jelly roll ID derived from an example embodiment in which the jelly rolls JR are arranged in an arbitrary matrix on the tray 20.

Referring to FIGS. 1, 2, 7, 15, and 17, restoring an unrecognized can ID of the cell tracking data CTDc may include restoring the unrecognized can ID based on a can ID temporally adjacent to the unrecognized can ID. According to example embodiments, the unrecognized can ID may be restored based on a can ID preceding the unrecognized can ID. According to example embodiments, the unrecognized can ID may be restored based on a can ID following the unrecognized can ID. According to example embodiments, the unrecognized can ID may be restored based on the can ID preceding the unrecognized can ID and the can ID following the unrecognized can ID. The "AD8Wo600005RQX" highlighted in shade in the table of FIG. 17 may have a different format from the can ID and may be an unrecognized can ID.

Since the cell cases CC are arranged in a matrix on a can tray and are sequentially input into the sub-equipment 110c, the can IDs that are temporally adjacent may be derived from the jelly rolls JR to be arranged adjacently on the tray 20. In other words, adjacent can IDs in the cell tracking data CTDc may include symbols that change sequentially. Accordingly, at least one of the symbols of the can IDs in the cell tracking data CTDc may represent an order in which the cell case CC is input into the sub-equipment 110c.

For example, the can ID "L1D8P030330T04" may follow the can ID "L1D8P030330T03", the can ID "L1D8P030330T05" may follow the can ID "L1D8P030330T04", and the can ID "L1D8P030330T06" may follow the can ID "L1D8P030330T05". Accordingly, some of the symbols of the can ID may represent an input order of the cell case CC from which the can ID is derived. For example, the last two symbols of the can ID may represent a column coordinate on the can tray. For example, the cell cases CC on the can tray may be arranged in a 17×18 matrix. Referring to FIG. 17, since the last two symbols of the can IDs are consecutive from 03 to 09 and from 0A to 0J, these may be understood as can IDs derived from the cell cases CC arranged in seventeen columns in one row, and the subsequent seventeen can IDs may be similarly understood as derived from the cell cases CC arranged in seventeen columns in one row.

The unrecognized can ID "AD8Wo600005RQX" may be restored based on the preceding can ID "L1D8P030330T0J" and/or the following can ID "L1D8P030330T1L". In this example, the cell cases CC on the can tray may be arranged in the 17×18 matrix, seventeen of which may be input into the sub-equipment 110c at a time. Accordingly, the can ID "L1D8P030330T0J" is derived from a different row from the unrecognized can ID "AD8Wo600005RQX", and the can ID "L1D8P030330T1L" is derived from the same row as the unrecognized can ID "AD8Wo600005RQX". Accordingly, the unrecognized can ID "AD8Wo600005RQX" may be restored as "L1D8P030330T1K".

While an example in which seventeen cell cases CC are input into the sub-equipment 110c at a time and seventeen can IDs sequentially change is described above, this is merely an example, and the present disclosure is not limited thereto in any sense. A person skilled in the art may easily reach an example embodiment in which the cell cases CC less than seventeen or more than seventeen are simultaneously input into the sub-equipment 110c.

The cell tracking data CTDc of process P50 includes matching between the jelly roll ID and can ID, and thus, may be used for connecting preceding historical data and subsequent historical data. According to example embodiments, the unrecognized jelly roll ID and the unrecognized can ID may be restored based on the rules of the jelly roll ID and the can ID of the cell tracking data CTDc, and the traceability disconnection may be prevented, and accordingly, the reliability of secondary battery manufacturing may be enhanced.

### (Fifth and Sixth Examples)

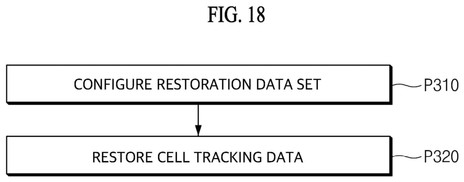

FIG. 18 is a flowchart for illustrating a method of managing cell tracking data according to example embodiments.

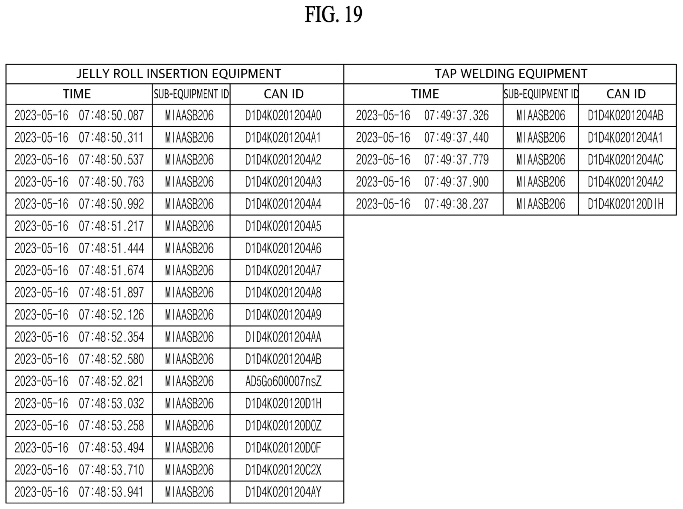

FIG. 19 is a diagram for illustrating a method of managing cell tracking data according to example embodiments.

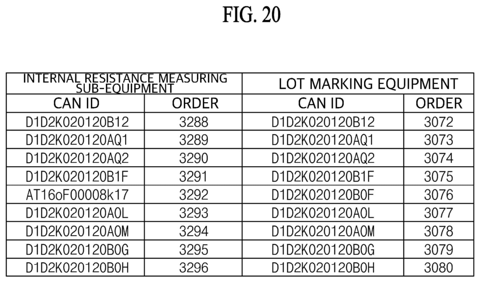

FIG. 20 is a diagram for illustrating a method of managing cell tracking data according to example embodiments.

Referring to FIGS. 1, 2, and 8, and FIGS. 18 to 20, a data set for restoration may be configured in operation P310. In FIG. 19, in the cell tracking data CTDc of the sub-equipment 100c collected from the controller 113c, the consecutive can IDs may be less than the intended number. For example, although the sub-equipment 110c is designed to allow seventeen cell cases CC to be input thereto simultaneously, the number of cell cases CC simultaneously input into the sub-equipment 110c may be different from seventeen. In this case, a can ID to be used to restore an unrecognized can ID may not be selected from a can ID following the unrecognized can ID and a can ID preceding the unrecognized can ID.

As such, when an unrecognized can ID may not be restored by the method of FIG. 15, a data set for restoration may be configured in operation P310. More specifically, in order to restore an unrecognized can ID of cell tracking data, a restoration data set including cell tracking data of a current sub-process and cell tracking data of an adjacent sub-process may be configured.

As an example, a restoration data set for restoring an unrecognized can ID of the cell tracking data collected from the controller 113c may include the cell tracking data CTDc of the sub-equipment 110c (in other words, jelly roll insertion equipment) collected from the controller 113c and the cell tracking data CTDd of the sub-equipment 110c (in other words, tab welding equipment) collected from the controller 113d. The restoration data set for restoring the unrecognized can ID of the cell tracking data CTDc collected from the controller 113c is illustrated in FIG. 19.

For example, since the unrecognized ID "AD5Go600007nsZ" of the cell tracking data of the equipment 110c is present between the can ID "D1D4K0201204AB" and the can ID "D1D4K020120D1H", a portion between the can ID "D1D4K0201204AB" and the can ID "D1D4K020120D1H" among the cell tracking data of the sub-equipment 110c (in other words, the tap welding equipment) collected from the controller 113d may be included in the restoration data set.

As another example, a restoration data set for restoring an unrecognized can ID of the cell tracking data collected from the controller 113n may include the cell tracking data CTDn of the sub-equipment 110n (in other words, internal resistance measuring equipment) collected from the controller 113n and the cell tracking data CTDm of the sub-equipment 110m (in other words, lot marking equipment) collected from the controller 113m. The restoration data set for restoring the unrecognized can ID of the cell tracking data CTDn collected from the controller 113n is illustrated in FIG. 19.

Subsequently, the cell tracking data may be restored in operation P320. Restoring the cell tracking data may include restoring the unrecognized can ID of the cell tracking data CTDc or restoring the unrecognized can ID of the cell tracking data CTDn collected in process P180.

For example, the unrecognized ID "AD5Go600007nsZ" of the cell tracking data CTDc of the equipment 110c is present between the can ID "D1D4K0201204AB" and the can ID "D1D4K020120D1H", and thus, may be restored as one of "D1D4K0201204AC" following the can ID "D1D4K0201204AB" or "D1D4K020120D1G" preceding the can ID "D1D4K020120D1H". The can ID "D1D4K0201204AC" is present between the can ID "D1D4K0201204AB" and the can ID "D1D4K020120D1H" among the cell tracking data CTDd collected from the sub-equipment 110d (in other words, the tab welding equipment) by the controller 113d, and is not included in the cell tracking data of the equipment 110c. Accordingly, the unrecognized ID "AD5Go600007nsZ" of the cell tracking data CTDc of the equipment 110c may be restored as the can ID "D1D4K0201204AC".

As another example, a can ID having a preceding order in the cell tracking data CTDn of the equipment 110n (in other words, the internal resistance measuring equipment) may be matched to a preceding order in the cell tracking data CTDm of the equipment 110m (in other words, the lot ID marking equipment), and a can ID having a following order in the cell tracking data CTDn of the equipment 110n may be matched to a following order in the cell tracking data CTDm of the equipment 110m. In other words, even if the order of each can ID in the cell tracking data CTDn of the equipment 110n and the order of each can ID in the cell tracking data CTDm of the equipment 110m do not correspond with each other, the order is maintained.

The unrecognized ID "AT16Of00008k17" of the cell tracking data CTDn of the equipment 110n is present between the can ID "D1D2K020120B1F" and the can ID "D1D2K020120AOL", and thus, may be restored as the can ID "D1D2K020120B0F", which is present between the can ID "D1D2K020120B1F" and the can ID "D1D2K020120AOL" among the cell tracking data of the equipment 110m.

### (Seventh Example)

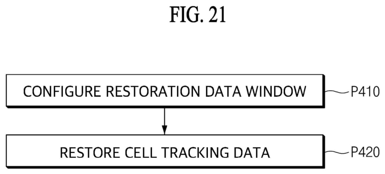

FIG. 21 is a flowchart for illustrating a method of managing cell tracking data according to example embodiments.

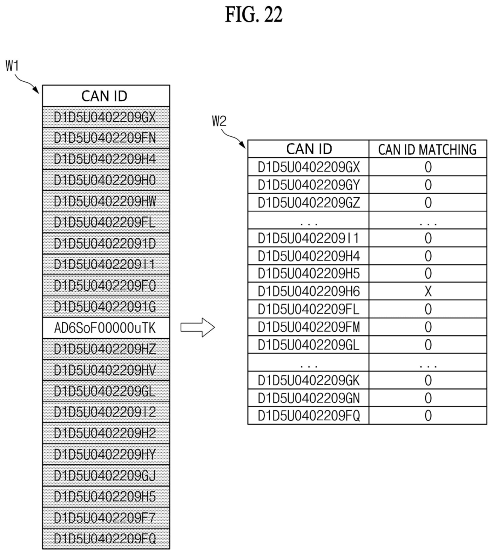

FIG. 22 is a diagram for illustrating a method of managing cell tracking data according to example embodiments.

Referring to FIGS. 21 and 22, first and second data windows for restoration W1 and W2 may be configured in operation P410. The first data window for restoration W1 may be provided from cell tracking data including an unrecognized can ID.

The method of FIG. 21, as in the method of FIG. 18, may be used when the unrecognized can ID of the cell tracking data may not be restored based on a data set for restoration. More specifically, the cell tracking data CTDi of a previous process, such as the sub-process P130, may be used to restore an unrecognized can ID of the cell tracking data CTDn. In this case, an order of the can ID of the cell tracking data CTDn and an order of the cell tracking data CTDi may be different. Accordingly, the first and second data windows for restoration W1 and W2 based on the unrecognized can ID may be configured.

In the example of FIG. 22, the first data window for restoration W1 may be configured based on the unrecognized can ID "AD6SoF00000uTK". The first data window for restoration W1 may include can IDs that are temporally adjacent to the unrecognized can ID "AD6SoF00000uTK". The first data window for restoration W1 may include a preset number (for example, ten) of preceding can IDs from the unrecognized can ID "AD6SoF00000uTK". The first data window for restoration W1 may include a preset number (for example, ten) of following can IDs from the unrecognized can ID "AD6SoF00000uTK".

From the first data window for restoration W1, "D1D5U0402209GX", which is the first can ID of the first restoration data window W1, and "1D5U0402209FQ", which is the last can ID thereof, may be determined. The "D1D5U0402209GX", which is the first can ID of the first restoration data window W1, and "1D5U0402209FQ", which is the last can ID thereof, may be used to configure the second data window for restoration W2. The second data window for restoration W2 may include a portion between the can ID "D1D5U0402209GX" and the can ID "1D5U0402209FQ" among the cell tracking data of the equipment 110i collected by a controller 117i.

Subsequently, in operation P420, the cell tracking data may be restored. Restoring the cell tracking data may include matching each of can IDs included in the second data window for restoration W2 with the can IDs of the cell tracking data from which the first data window for restoration W1 is derived. In the example of FIG. 22, among the can IDs of the second data window for restoration W2, the can ID "D1D5U0402209H6" may not be matched with the can IDs of the cell tracking data from which the first data window for restoration W1 is derived. When only a single can ID is not matched with the can IDs of the cell tracking data from which the first data window for restoration W1 is derived as described above, the unrecognized can ID may be restored as the corresponding can ID. Accordingly, the unrecognized can ID "AD6SoF00000uTK" of the first window may be restored as "D1D5U0402209H6".

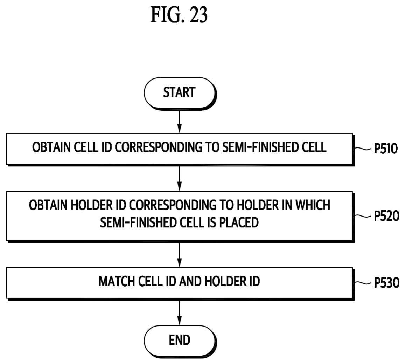

Hereinafter, a cell tracking method performed by the secondary battery manufacturing system 1000 is described with reference to FIGS. 23 to 28. More specifically, a method of tracking cells by matching IDs in the secondary battery manufacturing process by the secondary battery manufacturing system 1000 may be described with reference to FIGS. 23 to 28.

FIG. 23 is a flowchart for illustrating a method of managing cell tracking data according to example embodiments.

Since the method of FIG. 23 may be performed by the secondary battery manufacturing system 1000 of FIG. 2, any description overlapping with the above-described content may be omitted, and the method may be described using the configurations of FIG. 2.

The example embodiment illustrated in FIG. 23 is merely an example embodiment, and an order of operations according to various example embodiments of the present disclosure may be different from what is illustrated in FIG. 23, and some operations illustrated in FIG. 23 may be omitted, the order between operations may be changed, or operations may be merged.

Referring to FIG. 23, in operation P510, the secondary battery manufacturing system 1000 may obtain a cell ID corresponding to a semi-finished cell. According to an example embodiment, the secondary battery manufacturing system 1000 may obtain the cell ID based on the cell tracking data CTDa, CTDb, CTDc, CTDd, CTDe, CTDf, CTDg, CTDh, CTDi, CTDj, CTDm, and CTDn.

Here, the semi-finished cell may include various types of semi-finished cells manufactured during the manufacturing process performed on the secondary battery manufacturing system 1000. For example, in the case of a can-type battery manufacturing process, the semi-finished cell may be configured as a jelly roll, which is a winding structure of a positive electrode, a negative electrode, and a separator interposed therebetween, or a can-type battery cell in which a jelly roll is inserted into a cell case. As another example, in the case of a pouch-type battery manufacturing process, the semi-finished cell may be configured as a unit cell composed of at least one electrode of a polarity (for example, a positive electrode and/or a negative electrode) and a separator, a stacked electrode assembly formed by stacking a plurality of unit cells, a foldable electrode assembly formed by folding a plurality of unit cells, or a pouch-type battery cell in which an electrode assembly is inserted into a pouch. In this case, the unit cell may be configured as a mono cell in which a positive electrode and a negative electrode are respectively positioned on two outermost sides, a bi-cell in which electrodes of the same polarity are positioned on two outermost sides, or a half cell in which a positive electrode or a negative electrode is positioned between separators of the outermost sides.

In operation P520, the secondary battery manufacturing system 1000 may obtain a holder ID corresponding to a holder in which the semi-finished cell is placed. According to an example embodiment, the secondary battery manufacturing system 1000 may obtain the holder ID based on the cell tracking data CTDa, CTDb, CTDc, CTDd, CTDe, CTDf, CTDg, CTDh, CTDi, CTDj, CTDm, and CTDn.

Here, the holder may include various types of holders in which a semi-finished cell is placed during the manufacturing process performed on the secondary battery manufacturing system 1000. For example, in the case of a can-type battery manufacturing process, the holder may be configured as the carrier 115a or 115b on which a jelly roll is placed or a cell case into which a jelly roll is inserted. The carrier 115a or 115b may be a configuration used to hold a jelly roll in a particular sub-process targeting the jelly roll. The cell case may be a configuration of a cylindrical battery cell and may be a configuration into which the jelly roll is inserted in a particular sub-process. As another example, in the case of a pouch-type battery manufacturing process, the holder may be configured as a magazine in which unit cells are stacked or a pouch into which unit cells are inserted. The magazine may be a configuration that stacks and holds a plurality of unit cells to be stacked or folded before a stacking process or folding process for forming an electrode assembly by stacking or folding the plurality of unit cells, after a notching process for forming an electrode tab on an electrode sheet of a unit cell and a lamination process for bonding the unit cell to a separator, during the assembly process of the pouch-type battery. The pouch may be a configuration of the pouch-type battery cell and may be a configuration into which a stack cell or a folding cell is inserted in a packaging process.

In operation P530, the secondary battery manufacturing system 1000 may match the cell ID obtained in operation P510 and the holder ID obtained in operation P520.

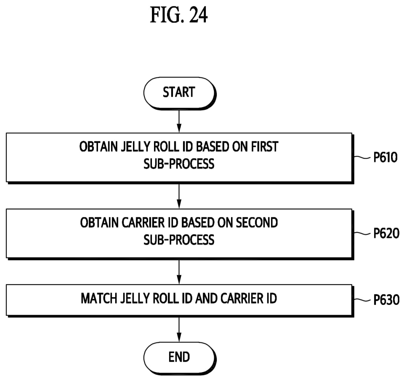

FIGS. 24 to 28 to be described below are flowcharts for describing a method of matching at least two of a jelly roll ID, a carrier ID, and a can ID in each of a plurality of sub-processes included in a can-type battery manufacturing process, by taking a case where the secondary battery manufacturing process performed by the secondary battery manufacturing system 1000 is the can-type battery manufacturing process as an example. However, this is only an example for convenience of description, and a cell tracking method of the present disclosure is not limited to the can-type battery manufacturing process and may also be applied to a pouch-type battery manufacturing process.

FIG. 24 is a flowchart for illustrating a method of managing cell tracking data according to example embodiments.

Since the method of FIG. 24 may be performed by the secondary battery manufacturing system 1000 of FIG. 2, any description overlapping with the above-described content may be omitted, and the method may be described using the configurations of FIG. 2.

The example embodiment illustrated in FIG. 24 is merely an example embodiment, and an order of operations according to various example embodiments of the present disclosure may be different from what is illustrated in FIG. 24, and some operations illustrated in FIG. 24 may be omitted, the order between operations may be changed, or operations may be merged.

Referring to FIG. 24, in operation P610, the secondary battery manufacturing system 1000 may obtain a jelly roll ID corresponding to a jelly roll based on a first sub-process. For example, the first sub-process may be process P30 of FIG. 1 in the manufacturing process performed by the secondary battery manufacturing system 1000.

In operation P620, the secondary battery manufacturing system 1000 may obtain a carrier ID corresponding to a carrier based on a second sub-process. Here, the carrier may be a configuration that loads the jelly roll having the jelly roll ID obtained in operation P610 in the second sub-process. For example, the second sub-process may be process P40 of FIG. 1 in the manufacturing process performed by the secondary battery manufacturing system 1000.

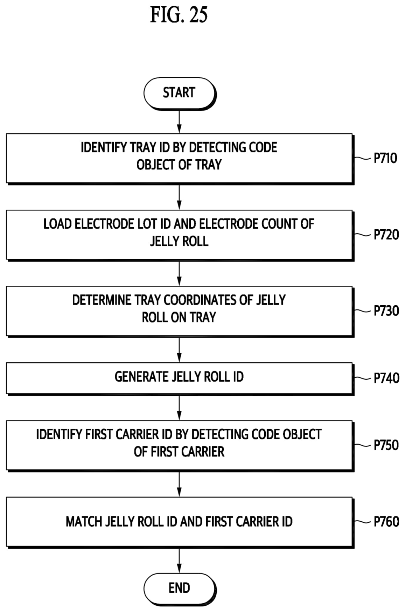

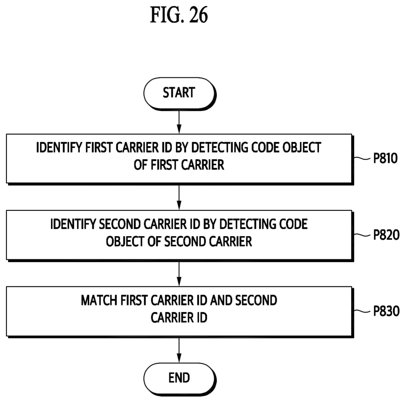

In operation P630, the secondary battery manufacturing system 1000 may match the jelly roll ID obtained in operation P610 and the carrier ID obtained in operation P620. Operation P630, in which the secondary battery manufacturing system 1000 matches the jelly roll ID and the carrier ID, may be described in more detail through FIGS. 25 and 26 to be described below.

FIG. 25 is a flowchart for illustrating a method of managing cell tracking data according to example embodiments. More specifically, FIG. 25 is a flowchart for describing a method of managing cell tracking data in the first sub-process described in FIG. 23 by the secondary battery manufacturing system 1000.

Since the method of FIG. 25 may be performed by the secondary battery manufacturing system 1000 of FIG. 2, any description overlapping with the above-described content may be omitted, and the method may be described using the configurations of FIG. 2.

The example embodiment illustrated in FIG. 25 is merely an example embodiment, and an order of operations according to various example embodiments of the present disclosure may be different from what is illustrated in FIG. 25, and some operations illustrated in FIG. 25 may be omitted, the order between operations may be changed, or operations may be merged.

Referring to FIG. 25, in operation P710, the secondary battery manufacturing system 1000 may identify a tray ID by detecting a code object of a tray onto which a jelly roll is loaded. Here, the code object may be a code image including information about an ID of a target detected and identified by a code reader (for example, the matrix reader 111a, 111b, 111c, 111d, 111e, 111f, 111g, 111h, 111i, 111j, 111m, or 111n) and may be implemented as at least one of a data matrix, a QR code, and a barcode.

In operation P720, the secondary battery manufacturing system 1000 may load an electrode lot ID and an electrode count of the jelly roll. Here, the electrode count may indicate an order in which the jelly roll is manufactured in winder equipment.

According to an example embodiment, the secondary battery manufacturing system 1000 may load the electrode lot ID and the electrode count of the jelly roll with identifying the tray ID in operation P710 as a trigger. For example, the secondary battery manufacturing system 1000 may load a positive electrode lot ID and a positive electrode count from a server such as an MES. As another example, the secondary battery manufacturing system 1000 may also load a negative electrode lot ID and a negative electrode count from a server such as the MES.

In operation P730, the secondary battery manufacturing system 1000 may determine tray coordinates of the jelly roll on the tray. According to an example embodiment, the secondary battery manufacturing system 1000 may determine the tray coordinates of the jelly roll on the tray based on an operation of a pick-and-place machine that moves the jelly roll loaded onto the tray to a first carrier 115a in the first sub-process.

In operation P740, the secondary battery manufacturing system 1000 may generate a jelly roll ID corresponding to the jelly roll. For example, the jelly roll ID may be a virtual ID generated using data related to the jelly roll.

According to an example embodiment, the secondary battery manufacturing system 1000 may generate the jelly roll ID based on the tray ID identified in operation P710. According to an example embodiment, the secondary battery manufacturing system 1000 may generate the jelly roll ID based on at least one of the electrode lot ID and the electrode count loaded in operation P720 and the tray coordinates determined in operation P730, in addition to the tray ID identified in operation P710.

In operation P750, the secondary battery manufacturing system 1000 may identify a first carrier ID by detecting a code object of the first carrier 115a onto which the jelly roll is loaded.

In operation P760, the secondary battery manufacturing system 1000 may match the jelly roll ID generated in operation P740 and the first carrier ID identified in operation P750. According to an example embodiment, the secondary battery manufacturing system 1000 may match the jelly roll ID and the first carrier ID by comparing time at which the jelly roll ID is generated in operation P740 and time at which the first carrier ID is identified in operation P750. For example, if a time interval between the time at which the jelly roll ID is generated and the time at which the carrier ID is identified is within a preset threshold time value, the generated jelly roll ID and the identified carrier ID may be matched with each other. In contrast, if the time interval between the time at which the jelly roll ID is generated and the time at which the carrier ID is identified exceeds the preset threshold time value, the generated jelly roll ID may be matched with another carrier ID whose time interval is within the threshold time value.

FIG. 26 is a flowchart for illustrating a method of managing cell tracking data according to example embodiments. More specifically, FIG. 26 is a flowchart for describing a method of managing cell tracking data in the second sub-process described in FIG. 23 by the secondary battery manufacturing system 1000.

Since the method of FIG. 26 may be performed by the secondary battery manufacturing system 1000 of FIG. 2, any description overlapping with the above-described content may be omitted, and the method may be described using the configurations of FIG. 2.

The example embodiment illustrated in FIG. 26 is merely an example embodiment, and an order of operations according to various example embodiments of the present disclosure may be different from what is illustrated in FIG. 26, and some operations illustrated in FIG. 26 may be omitted, the order between operations may be changed, or operations may be merged.

Referring to FIG. 26, in operation P810, the secondary battery manufacturing system 1000 may identify a first carrier ID by detecting a code object of the first carrier 115a. Operation P810 described here may be a different operation from operation P750 of FIG. 24. Specifically, operation P750 of FIG. 23 may be an operation of identifying the first carrier ID during the first sub-process, whereas operation P810 may be an operation of identifying the first carrier ID during the second sub-process.

In operation P820, the secondary battery manufacturing system 1000 may identify a second carrier ID by detecting a code object of a second carrier 115a.

In operation P830, the secondary battery manufacturing system 1000 may match the first carrier ID identified in operation P810 and the second carrier ID identified in operation P820. According to an example embodiment, the secondary battery manufacturing system 1000 may match the first carrier ID and the second carrier ID by comparing time at which the first carrier ID is identified in operation P810 and time at which the second carrier ID is identified in operation P820. For example, if a time interval between the identification times of the first carrier ID and the second carrier ID is within a preset threshold time value, the identified first carrier ID and second carrier ID may be matched with each other. In contrast, if the time interval between the identification times of the first carrier ID and the second carrier ID exceeds the preset threshold time value, the identified first carrier ID may be matched with another second carrier ID whose time interval is within the threshold time value.

According to an example embodiment, the secondary battery manufacturing system 1000 may store matching between the jelly roll ID and the first carrier ID of operation P760 of FIG. 25. Accordingly, the secondary battery manufacturing system 1000 may match the jelly roll ID based on the first sub-process and the carrier ID (for example, the second carrier ID) based on the second sub-process as in operation P630 of FIG. 24, through the first carrier ID.

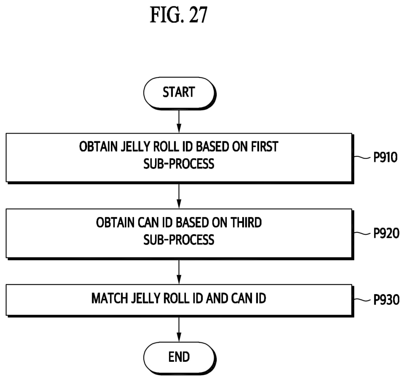

FIG. 27 is a flowchart for illustrating a method of managing cell tracking data according to example embodiments.

Since the method of FIG. 27 may be performed by the secondary battery manufacturing system 1000 of FIG. 2, any description overlapping with the above-described content may be omitted, and the method may be described using the configurations of FIG. 2.

The example embodiment illustrated in FIG. 27 is merely an example embodiment, and an order of operations according to various example embodiments of the present disclosure may be different from what is illustrated in FIG. 27, and some operations illustrated in FIG. 27 may be omitted, the order between operations may be changed, or operations may be merged.

Referring to FIG. 27, in operation P910, the secondary battery manufacturing system 1000 may obtain a jelly roll ID corresponding to a jelly roll based on a first sub-process. Operation P910 may be the same operation as operation P610 of FIG. 24.

In operation P920, the secondary battery manufacturing system 1000 may obtain a can ID corresponding to a cell case into which the jelly roll is inserted, based on a third sub-process. For example, the third sub-process may be process P50 of FIG. 1 in the manufacturing process performed by the secondary battery manufacturing system 1000.

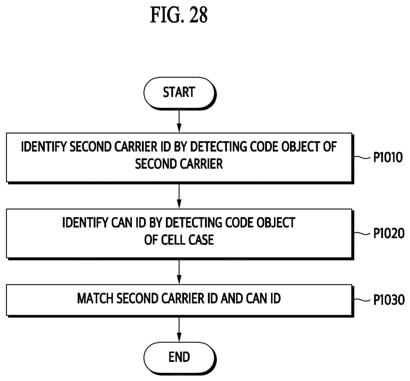

In operation P930, the secondary battery manufacturing system 1000 may match the jelly roll ID obtained in operation P910 and the can ID obtained in operation P920. Operation P930, in which the secondary battery manufacturing system 1000 matches the jelly roll ID and the can ID, may be described in more detail through FIG. 28 to be described below.

FIG. 28 is a flowchart for illustrating a method of managing cell tracking data according to example embodiments. More specifically, FIG. 28 is a flowchart for describing a method of managing cell tracking data in the third sub-process described in FIG. 27 by the secondary battery manufacturing system 1000.

Since the method of FIG. 28 may be performed by the secondary battery manufacturing system 1000 of FIG. 2, any description overlapping with the above-described content may be omitted, and the method may be described using the configurations of FIG. 2.

The example embodiment illustrated in FIG. 28 is merely an example embodiment, and an order of operations according to various example embodiments of the present disclosure may be different from what is illustrated in FIG. 28, and some operations illustrated in FIG. 28 may be omitted, the order between operations may be changed, or operations may be merged.

Referring to FIG. 28, in operation P1010, the secondary battery manufacturing system 1000 may identify a second carrier ID by detecting a code object of the second carrier 115b. Operation P1010 described here may be a different operation from operation P830 of FIG. 26. Specifically, operation P830 of FIG. 26 may be an operation of identifying the second carrier ID during the second sub-process, whereas operation P1010 may be an operation of identifying the second carrier ID during the third sub-process.

In operation P1020, the secondary battery manufacturing system 1000 may identify a can ID by detecting a code object of a cell case into which a jelly roll is inserted.

In operation P1030, the secondary battery manufacturing system 1000 may match the second carrier ID identified in operation P1010 and the can ID identified in operation P1020. According to an example embodiment, the secondary battery manufacturing system 1000 may match the second carrier ID and the can ID by comparing time at which the second carrier ID is identified in operation P1010 and time at which the can ID is identified in operation P1020. For example, if a time interval between the identification time of the second carrier ID and the identification time of the can ID is within a preset threshold time value, the identified second carrier ID and the identified can ID may be matched with each other. In contrast, if the time interval between the identification time of the second carrier ID and the identification time of the can ID exceeds the preset threshold time value, the identified second carrier ID may be matched with another can ID whose time interval is within the threshold time value.

According to an example embodiment, the secondary battery manufacturing system 1000 may store matching between the jelly roll ID and the first carrier ID in operation P760 of FIG. 25 and matching between the first carrier ID and the second carrier ID in operation P830 of FIG. 26. Accordingly, the secondary battery manufacturing system 1000 may match the jelly roll ID based on the first sub-process and the can ID obtained based on the third sub-process as in operation P930 of FIG. 27, through the second carrier ID.

As above, the present disclosure is described in more detail through the drawings and example embodiments. However, the example embodiments described in the present disclosure and the configurations illustrated in the drawings are only an example embodiment of the present disclosure and do not fully cover the technical idea of the present disclosure, and thus, it should be understood that various equivalents and modification examples may be present as alternatives thereto when this application is filed.

## Claims

1. A method of managing cell tracking data, the method comprising:
loading cell tracking data including an unrecognized jelly roll identification (ID) and a jelly roll ID adjacent to the unrecognized jelly roll ID, wherein the jelly roll ID is used to distinguish a jelly roll, which is a winding structure of a positive electrode, a negative electrode, and a separator; and
restoring the unrecognized jelly roll ID based on the jelly roll ID.

2. The method of claim 1, wherein the jelly roll ID precedes the unrecognized jelly roll ID.

3. The method of claim 1, wherein the jelly roll ID follows the unrecognized jelly roll ID.

4. The method of claim 1, wherein the jelly roll is input into an assembly process of a secondary battery, and
wherein the jelly roll ID includes a symbol representing an input order of the jelly roll, and
wherein the unrecognized jelly roll ID is restored as a value in which the symbol representing the input order of the jelly roll ID is changed.

5. The method of claim 4, wherein the symbol is changed to indicate a preceding order.

6. The method of claim 4, wherein the symbol is changed to indicate a following order.

7. A method of managing cell tracking data, the method comprising:
loading cell tracking data including an unrecognized can ID and a can ID adjacent to the unrecognized can ID, wherein the can ID is used to distinguish a cell case into which a jelly roll, which is a winding structure of a positive electrode, a negative electrode, and a separator, is inserted; and
restoring the unrecognized can ID based on the can ID,
wherein the can ID is determined by reading of a data matrix of the cell case, and
wherein the unrecognized can ID is determined by failure of the reading of the data matrix.

8. The method of claim 7, wherein the can ID precedes the unrecognized can ID.

9. The method of claim 7, wherein the can ID follows the unrecognized can ID.

10. The method of claim 7, wherein the can is input into an assembly process of a secondary battery, and
wherein the can ID includes a symbol representing an input order of the cell case, and
wherein the unrecognized can ID is restored as a value in which the symbol representing the input order of the can ID is changed.

11. The method of claim 10, wherein the symbol is changed to indicate a preceding order.

12. The method of claim 10, wherein the symbol is changed to indicate a following order.

13. A method of managing cell tracking data, the method comprising:
loading a data set for restoration including first cell tracking data and second cell tracking data; and
restoring an unrecognized can ID of the first cell tracking data based on the data set for restoration,
wherein the first cell tracking data is collected from a first sub-equipment configured to perform a first sub-process of an assembly process of a battery cell,
wherein the second cell tracking data is collected from a second sub-equipment configured to perform a second sub-process of the assembly process of the battery cell,
wherein the first cell tracking data and the second cell tracking data include a plurality of can IDs,
wherein the can ID is used to distinguish a cell case into which a jelly roll, which is a winding structure of a positive electrode, a negative electrode, and a separator, is inserted,
wherein the can ID is determined by reading of a data matrix of the cell case, and
wherein the unrecognized can ID is determined by failure of the reading of the data matrix.

14. The method of claim 13, wherein the second sub-process is performed after the first sub-process is performed.

15. The method of claim 13, wherein the second sub-process is performed before the first sub-process is performed.

16. The method of claim 13, wherein the plurality of can IDs include a first can ID preceding the unrecognized can ID and a second can ID following the unrecognized can ID, and
wherein the unrecognized can ID is restored based on a portion of the second cell tracking data between the first can ID and the second can ID.

17. The method of claim 16, wherein the unrecognized can ID is restored as one of can IDs present between the first can ID and the second can ID among the plurality of can IDs of the second cell tracking data.

18. The method of claim 16, wherein the unrecognized can ID is restored based on one of the first can ID and the second can ID.

19. A method of managing cell tracking data, the method comprising:
loading a data set for restoration including first cell tracking data and second cell tracking data; and
restoring an unrecognized can ID of the first cell tracking data,
wherein the first cell tracking data is collected from a first sub-equipment configured to perform a first sub-process of an assembly process of a battery cell,
wherein the second cell tracking data is collected from a second sub-equipment configured to perform a second sub-process of the assembly process of the battery cell,
wherein the first cell tracking data and the second cell tracking data includes a plurality of can IDs,
wherein the can ID is used to distinguish a battery cell including a jelly roll, which is a winding structure of a positive electrode, a negative electrode, and a separator, and a cell case into which the jelly roll is inserted,
wherein the can ID is determined by reading of a data matrix of the cell case, and
wherein the unrecognized can ID is determined by failure of the reading of the data matrix.

20. The method of claim 19, wherein the second sub-process is performed after the first sub-process is performed.

21. The method of claim 19, wherein the second sub-process is performed before the first sub-process is performed.

22. The method of claim 19, wherein the plurality of can IDs include a first can ID preceding the unrecognized can ID and a second can ID following the unrecognized can ID, and
wherein the unrecognized can ID is restored based on a portion of the second cell tracking data between the first can ID and the second can ID.

23. The method of claim 22, wherein the unrecognized can ID is restored as a lot ID present between the first can ID and the second can ID among the plurality of lot IDs of the second cell tracking data.

24. A method of managing cell tracking data, the method comprising:
configuring a first data window for restoration based on first cell tracking data and configuring a second data window for restoration based on second cell tracking data; and
restoring an unrecognized can ID of the first cell tracking data based on the second data window for restoration,
wherein the first cell tracking data is collected from a first sub-equipment configured to perform a first sub-process of an assembly process of a battery cell,
wherein the second cell tracking data is collected from a second sub-equipment configured to perform a second sub-process of the assembly process of the battery cell,
wherein the first cell tracking data and the second cell tracking data include a plurality of can IDs,
wherein the can ID is used to distinguish a battery cell including a jelly roll, which is a winding structure of a positive electrode, a negative electrode, and a separator, and a cell case into which the jelly roll is inserted, and
wherein the unrecognized can ID is generated when determining of the plurality of can IDs fails.

25. The method of claim 24, wherein the second sub-process is performed after the first sub-process is performed.

26. The method of claim 24, wherein the second sub-process is performed before the first sub-process is performed.

27. The method of claim 24, wherein the first data window for restoration includes a first can ID, which is a first of can IDs included in the first data window for restoration among the plurality of can IDs, and a second can ID, which is a last of the can IDs included in the first data window for restoration among the plurality of can IDs, and
wherein the second data window for restoration includes can IDs between the first can ID and the second can ID among the plurality of can IDs.

28. The method of claim 27, wherein the unrecognized can ID of the first cell tracking data is restored based on matching the first cell tracking data with the can IDs included in the second data window for restoration among the plurality of can IDs.

29. The method of claim 27, wherein the unrecognized can ID of the first cell tracking data is restored based on a can ID that is not present in the first cell tracking data among the can IDs included in the second data window for restoration among the plurality of can IDs.
